(19) Europäisches Patentamt
European Patent Office
Office européen des brevets

(11) **EP 2 006 127 B1**

(12) **EUROPEAN PATENT SPECIFICATION**

(45) Date of publication and mention
of the grant of the patent:
**06.01.2010 Bulletin 2010/01**

(51) Int Cl.:
***B60C 27/18*** *(2006.01)*

(86) International application number:
**PCT/JP2007/055905**

(21) Application number: **07739348.6**

(22) Date of filing: **22.03.2007**

(87) International publication number:
**WO 2007/116638 (18.10.2007 Gazette 2007/42)**

(54) **TIRE CHAIN MADE OF TEXTILE**

REIFENKETTE AUS TEXTIL

CHAINE EN ETOFFE POUR PNEUS

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **22.03.2006 JP 2006079425**

(43) Date of publication of application:
**24.12.2008 Bulletin 2008/52**

(73) Proprietor: **Toyo Boseki Kabushiki Kaisha
Osaka-shi, Osaka 530-8230 (JP)**

(72) Inventors:
• **KONISHI, Tatsuo
Osaka-shi, Osaka 530-8230 (JP)**
• **FUJII, Tamotsu
Osaka-shi, Osaka 530-8230 (JP)**

• **ICHIKAWA, Eiji
Hamamatsu-shi, Shizuoka 430-0853 (JP)**

(74) Representative: **Weber, Thomas
Patentanwälte
von Kreisler Selting Werner
Deichmannhaus am Dom
Bahnhofsvorplatz 1
50667 Köln (DE)**

(56) References cited:
EP-A- 1 577 428     DE-A1- 1 605 718
DE-A1- 1 605 718    DE-A1- 1 912 788
DE-A1- 1 912 788    FR-A- 403 877
GB-A- 162 932       JP-A- 07 156 622
JP-A- 51 076 709    JP-A- 2002 541 007
JP-U- 53 143 302    JP-U- 62 106 808
US-A- 2 682 907     US-A1- 2006 011 281

**Description**

TECHNICAL FIELD

The present invention relates to a tire chain made of a knit fabric used for a vehicle tire as a slip stopper while a vehicle is driving on a snow-covered road or a frozen road. The tire chain made of a knit fabric according to the present invention is, of course, applicable to an automobile tire and also applicable to tires for the other various vehicles.

BACKGROUND ART

When an automobile drives on a snow covered road or a frozen road, it is typical to use tires having a slip stopping effect such as studded tires and winter tires instead of normal tires (so-called summer tires), or to install tire chains to tires to prevent the automobile from slipping on the snow-covered road or the frozen road.
In such areas that road surfaces are always covered by snow and ice during winter season, tires themselves are often changed. However, in the areas other than the above described ice desert areas, especially, in city areas, it is typical to install tire chains to the normal tires only when it is required.
Examples of the above-described installing type tire chain include a metal chain, a resin chain, and a chain made of a fiber. Among those, a chain formed into a net shape using ropes is proposed for the chain made of a fiber (see, for example, Japanese Patent Application Laid open Publication No. 07-156622 (for example, claims of the publication) (hereinafter it may be referred to as a tire chain made of a rope).
A slip prevention device made of a fabric, although not a chain shaped slip stopper, is also proposed as the installing type slip stopper made of a woven fabric (see, for example, Published Japanese Translation of PCT International Publication for Patent Application No. 2002-541007 (see, for example, claims, paragraph [0016], Figs. 1 to 7, etc. of the publication)) (for the sake of convenience, it is so considered that the slip prevention device made of a woven fabric is also encompassed within a scope of tire chain in the present specification, and the slip prevention device made of a woven fabric may be referred to as a tire chain made of a woven fabric). A portion contacting a surface of a road of the tire chain made of a woven fabric is made of a woven fabric which is made of a material having a good adhesion to a surface of a snow-covered road. The tire chain made of a woven fabric is further provided with an elastic member at a portion corresponding to a side surface of the tire to ease an attachment/detachment of the tire chain made of a woven fabric to/from the tire owing to the elasticity, thereby eliminating a need for a juck-up when the tire chain made of a woven fabric is installed to a tire.
Recently, those tire chains made of a fiber such as the tire chain made of ropes and the tire chain made of a woven fabric come under attention since they are light in weight as well as excellent in storage property since they can be folded into a compact size.
DE-A-16057148 discloses a tire chain made of a knit fabric according to the features of claim 1, which can be removably installed to the tread portion of a tire to enhance the grip of the tire on snow.
US-A-2006011281 discloses a slip-proof cover for vehicle tires for use in adverse weather conditions, preferably snow or ice, with a configuration that allows a simple mounting. The cover is highly reliable and positionally stable, and has a good mechanical performance with respect to abrasion. The cover has a structure and composition of the cut swath that optimise its slip-proof characteristics and its resistance to abrasion.
FR-A-403877 discloses a slip-proof textile net for vehicle tires.

DISCLOSURE OF THE INVENTION

And now, such performances are required for the tire chains as durability, and a braking performance and the hill-climbing performance on the ice and snow. With regard to this point, for example, Japanese Patent Application Laid open Publication No. 07-156622 teaches the tire chain made of a rope having a shape of the conventional metal chain and resin chain as they are but being made of ropes; however, in which no study is made as to the durability, the braking performance and the like in view of the chain made of a fiber. Further, in the case of the tire chains made of a woven fabric, since it ensures the braking performance depending on the adherence of a fabric material, there is still a room for further study and improvement.
Accordingly, the present invention is directed to provide a further improved tire chain made of a knit fabric excellent in durability, braking performance, and hill-climbing performance while taking the advantage of the tire chain made of a knit fabric excellent in the light weight property and storage property of the chain made of a knit fabric.
As a result of a keen consideration, the present inventors found that an excellent tire chain can be obtained by adapting the tire chain made of knit fabric as a the tire chain made of fiber and satisfy the predetermined requirements stated below, and lead to the present invention.
The tire chain made of a knit fabric according to the above-described present invention is a tire chain made of a fiber to be removably installed to a tire, wherein a cylindrical body tightly covering at least a contact patch of a tire has a knit fabric structure, a relationship between a space area (S) of a mesh of the knit fabric structure in a state where the tire chain is installed to a tire and a width (W) of a strand of the knit fabric structure when the tire chain made of a knit fabric is installed to the tire, satisfies the following formula (1), and a thickness of a burl portion of the knit fabric structure is three times or less as a thickness of a net leg portion of the knit fabric structure.

$$2 \leqq S^{1/2}/W \leqq 15 \quad \dots (1)$$

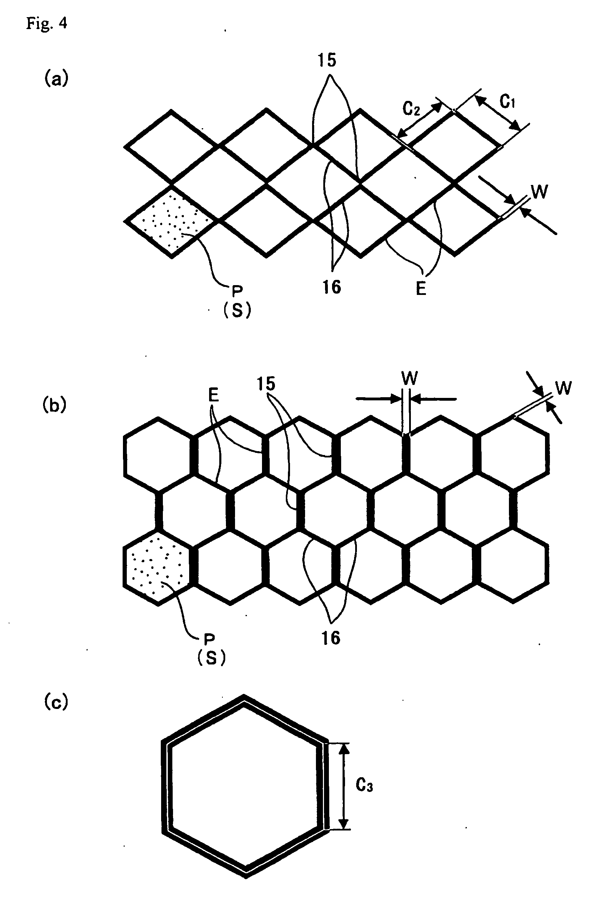

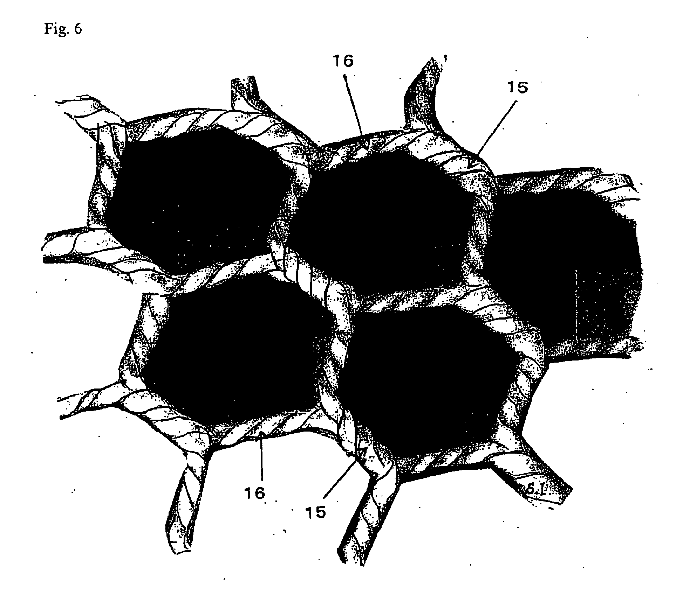

Here, the "burl portion" is a crossing point of a knitted loop of the tire chain made of a knit fabric, and the "net leg portion" is a non-crossing point of the knitted loop of the tire chain made of a knit fabric. For example, an explanation thereof is made exemplifying Fig. 4 (a partially enlarged schematic view illustrating the knit fabric structure under a condition that the tire chain made of a knit fabric according to one example of the present invention is installed to a tire). The "net leg portion" is, as indicated by a reference numerical "16", a portion that a net yarn extends in the knit fabric structure of a portion on a tire c space area ontact patch (a portion covering a contact patch of a tire) formed into a lattice shape (Fig. 4(a)), a honeycomb shape (Fig. 4(b), or the like, and the "burl portion" is, as indicated by a reference numerical "15", a portion that the net leg portions 16 are connected to each other. Here, in the case of the honeycomb shape (Fig. 4(b)), Fig. 6: an enlarged view illustrating a state of the honeycomb shaped knitted loop), a paired two opposed sides among six sides which form the honeycomb mesh is formed such that the crossing point is elongated, so that two sides of the - honeycomb mesh are formed into a burl portion 15 and the other four sides of the honeycomb mesh is formed into net leg portions 16.

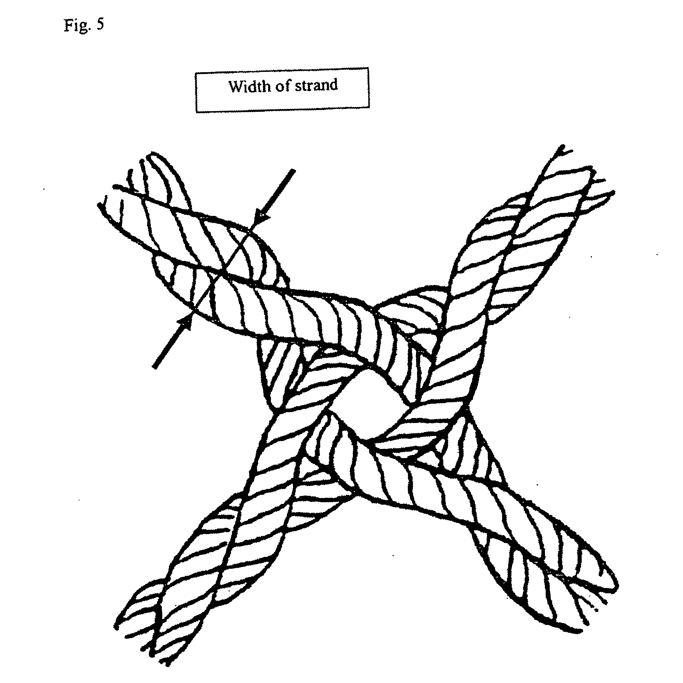

The "strand" is a line-like portion (a net yarn portion) which forms a knitted loop in a state that the yarns are knitted. For example, the net leg portion corresponds to the strand in the case of a knotless diamond meshed knit fabric (see, for example, E illustrated in Fig. 4(a)), and a net leg portion and an elongated burl portion correspond to the strand in the case of the knotless honeycomb meshed knit fabric (see, for example, E illustrated in Fig. 4(b)). Further, the "width of the strand" refers to a width of the net leg portion or the elongated burl portion (see, for example, W illustrated in Fig. 4). Here, if there are a thicker portion and a thinner portion in one side of the strand in an outer appearance, a width of the thicker portion is referred to as the width of the strand (Fig. 5: a view for explaining the strand width (W) (a position having the thickest width is measured by a caliper as the strand width)). The "mesh " is a space enclosed by the strands forming the knit fabric structure, and the "space area of a mesh " is an area enclosed by an inner side of the strands of the tire chain made of a knit fabric (for example, a portion of P illustrated in Fig. 4).

Further, the above-described "tightly covering the contact patch of a tire" means to eliminate such a state that the tire chain can not provide a sufficient function as a tire chain due to a positioning of the tire chain largely away from the contact patch of a tire, and therefore, in the present invention, it is not only limited to a state that both of the tire and the tire chain are tightly closed to each other, but a state that the tire chain covers the tire while they a spaced slightly apart to each other but can fulfill a function of a tire chain.

As stated above, the present invention can be a tire chain excellent in the durability, the braking performance, and the hill-climbing performance by satisfying each of the requirements of the present invention.

More specifically, a relationship between a size of the mesh and a strand fineness to be used becomes optimum in demonstrating the good braking performance and hill-climbing performance, by satisfying the formula (1). In other words, if the $S^{1/2}/W$ is 2 or more, a satisfactory strand jamming effect can be produced to a road covered with ice and snow, thereby providing a good braking performance and hill-climbing performance. To the contrary, if the $S^{1/2}/W$ is less than 2, the space area becomes too narrower with respect to the thickness of the strand, thereby raising a concern that an insufficient strand jamming effect may be produced to the snow-covered road. On the other hand, if the $S^{1/2}W$ is larger than 15, the space area becomes too wider with respect to the thickness of the strand, thereby enlarging an area where a tire surface contacts a road surface through a space between the strands of the tire chain made of a knit fabric, which may deteriorate the braking performance and the hill-climbing performance. Therefore, the $S^{1/2}W$ is to be set 15 or less as stated above. Preferably, the $S^{1/2}/W$ is 4 or more and 10 or less, and more preferably, is 5 or more and 8 or less.

For the space area (S) of the mesh, the space area (S) of each of the meshes in the knit fabric structure of the portion covering the contact patch of a tire is required to satisfy the above-described formula (1), respectively. Even if an average value of the space areas of the meshes satisfies the formula (1), as far as it is the average value calculated based on the too large meshes and the too small meshes, an area of the too large mesh at which the tire surface contacts the road surface through a space between the strands becomes larger as described above to cause a possibility of deteriorating the braking performance and the like, whereas an area of the too small meshes may cause a unsatisfactory strand jamming effect to the snow-covered road. To the contrary, if the individual mesh satisfies the above-described formula (1), a good braking performance and hill-climbing performance can be demonstrated even with any one of the contacting portions.

In the entire area scope of a portion covering the contact patch of a tire, it is not required for the knit fabric structure to satisfy the above-described formula (1). The braking performance and the hill-climbing performance are not seriously affected if there are some meshes which do not satisfy the above-described formula (1), or woven fabric is provided only partially. A part in which the tire contacts the road while it is deformed by its vehicle weight, since the contacting part of the tire (a portion at which the tire contacts the road surface through the tire chain) is of a certain size, the braking performance and the hill-climbing performance can be demonstrated as far as there is a knit fabric structure satisfying the formula (1) at the contact patch of a tire. More specifically, it is sufficient that at least 80%, or more preferably 90% or more, of the portion covering the contact patch of a tire satisfies the above-described formula (1). The most preferable one is the one in which the entire portion covering the contact patch of a tire satisfies the above-described formula (1).

S (space area of a mesh) with regard to the mesh to be calculated and W (width of a strand) of the strands forming the mesh are used in calculating the $S^{1/2}/W$ of the above-described formula (1). Further, in the case where the mesh is made of a plurality of kinds of strands, a width of each of the strands are averaged and the resulting value W is used in the above calculation (for example, when strands of six sides forming the honeycomb-shape mesh have different thicknesses between two sides and four sides thereof as illustrated in Fig. 4(b) and Fig. 6, the widths W of the strands are averaged and the resulting averaged value is used in the formula (1) as a value W. Further, for example, the strands of four sides forming a diamond-shaped mesh have different thickness between two sides and the other two sides, the widths W of the strands are averaged and the resulting average value is used in the formula (1) as a value W).

The tire chain made of a knit fabric of the present invention encompasses in its scope the one that a portion other than the portion covering a contact patch of a tire is also made of a knit fabric. However, it is only sufficient that the above-described formula (1) is satisfied with respect to the knit fabric (knit fabric structure) of the portion covering the contact patch of a tire (portion on a tire contact patch of ground), but the above-described formula (1) is not necessarily satisfied with respect to the knit fabric of the portion on a side portion of a tire even if the knit fabric is arranged, for example, on a side portion of a tire other than the portion covering the contact patch of a tire. This is because, this portion imposes insignificant effect on the braking performance and the like.

In the present invention, the portion covering the contact patch of a tire may be entirely or partially made into a laminated structure, i.e., for example, the knit fabric is arranged at a side of a road surface and a rubber sheet is arranged at a back side (opposite side of the road) for form a laminated layer, in addition to a case where the entire portion covering the contact patch of a tire is made into a single-layer structure made of a knit fabric. With an arrangement that the knit fabric is arranged at the side facing to the road surface, the laminated portion can demonstrate a good braking performance and hill-climbing performance according to the strand jamming effect owing to the knit fabric as stated above.

The preferable strand fineness is between 5,000 and 120,000 dtex in consideration of the durability. More preferable strand fineness is between 20,000 and 100,000 dtex. Further preferable strand fineness is between 40,000 and 80,000 dtex. If the strand is too thin, there is a concern of a scissile strand due to a friction during a driving of a vehicle. On the other hand, if the strand is too thick, there is a concern that a sufficient strand jamming effect can not be achieved to the snow-covered road. Further, if the strand is too thick, a weight of the entire tire chain made of a knit fabric becomes too heavy and causes impairment of a significant characteristic of the tire chain made of a fiber, which is not preferable.

In the diamond meshed knit fabric, a fineness of the net leg portion corresponds to the strand fineness. Explanation thereof will be given below with an example. For example, six pieces of material yarn such as polyester multifilament yarn of 1,100 dtex/24 filaments are paralleled, and then six of this paralleled yarn are first-twisted. Two of this twist yarn are final-twisted while they are set up on a knotless knitting machine. Thereby obtaining a fineness of the net leg portion is 1,100 x 6 x 6 x 2 = 79,200 dtex, which is the strand fineness. Further, a knotless honeycomb meshed knit fabric will be explained below with an example. For example, six pieces of material yarn such as a polyester multifilament yarn of 1,100 dtex/24 filaments are paralleled, and then six of these paralleled yarn are first-twisted. Two set of this twist yarn are final twisted while they are set up on a knotless knitting machine. Thereby obtaining a fineness of the net leg portion (forming four sides of the honeycomb shape) is 1,100 x 6 x 6 x 2 = 79,200 dtex and a fineness of the elongated burl portion (forming two sides of the honeycomb shape) of 1,100 x 6 x 6 x 2 x 2 = 158,400 dtex. An average value, i.e., {(79,200 x 4) + (158,400 x 2)}/6= 105,600 dtex is the strand fineness.

Here, the tire chain made of a knit fabric is compared with the tire chain made of a woven fabric. The tire chain made of a knit fabric is more excellent in the braking performance and the hill-climbing performance on the road covered by ice and snow than the tire chain made of a woven fabric as described below. In other words, when the braking performance and the hill-climbing performance are taken into consideration, an optimum relationship is needed between the thickness of the strand (strand width W) and the space area (S) as described above. Further, when this optimum relationship is applied to woven fabric in order to satisfy the relationship of $2 \leqq S'^{1/2}/W' \leqq 15$ between a space area (S') and a width (W') of a strand of the woven fabric, pulled stitches tend to occur since the spaces are too large as the woven fabric structure, thereby causing the pulled stitches while the vehicle is driving to make close portions and rough portions in meshes. As a result thereof, the relationship between the strand thickness and the space area becomes undesirable (unsatisfies the above-described formula), and therefore, the good braking performance and hill-climbing performance can not be demonstrated. To the contrary, the tire chain made of a knit fabric of the present invention having the knit fabric structure has an advantage in its knitting structure that the pulled stitches hardly occur.

For the tire chain made of a woven fabric, the pulled stitches comes to hardly occur by plasticizing the woven construction with resin; however, in this case, the tire chain made of a woven fabric becomes very hard and thus it becomes hard to fold, thereby decreasing a storage property and deteriorating a close contact ability with the tire when it is installed to a tire. Therefore, the advantage of the tire chain made of a fiber can not be demonstrated effectively.

In the present invention, it is required that a thickness of the burl portion of the knit fabric (knit fabric structure) is three times or less as the thickness of the net leg portion of the knit fabric. If it becomes more than three times, the burl portion mainly contacts the road surface while the vehicle is driving on the road, and therefore friction begins from the burl portion. As a result thereof, the burl portion comes to be intensively breakable to deteriorate the durability. Preferably, the thickness of the burl portion of the knit fabric is two times or less as the thickness of the net leg portion. In the case of two times or less, a degree of difference in friction between the burl portion and the portion other than the burl portion (net leg portion) becomes remarkably smaller to improve the durability of the tire chain made of a knit fabric in its entirety. More preferably, the thickness of the burl portion of the knit fabric is 1.5 times or less, and further preferably, is 1.2 times or less, as the thickness of the net leg portion.

The "thickness of the burl portion" and the "thickness of the net leg portion" are the thicknesses in a direction of a knit fabric thickness. Measurement of the thickness is performed by a measurement method as will be described below.

It is sufficient that the above-described relationship between the thickness of the burl portion and the thickness of the net leg portion satisfies as to the knit fabric (knit fabric structure) of the portion covering the contact patch of a tire (portion on the tire contacting patch to ground). Even if tire chain made of a knit fabric comprises the knit fabric portion other than the portion covering the contact patch of a tire, for example, on the portion on the side portion of the tire, it is not necessary for the portion other than the tire contacting patch of the knit fabric to satisfy the above-described thickness relationship This is because this portion does not contact the road surface.

For the knit fabric (knit fabric structure) may be any one of the knit fabric without a knot at the burl portion (crossing portion) (for example, a knotless net, or a raschel net), or a knit fabric having a knot at the burl portion (for example, a double sheet bend net, or a reef knot net). The knit fabric is not limited to any one of the above; however, it is more preferable that the knit fabric is made of the knit fabric without a knot at the burl portion (crossing point). With the knotless knit fabric, the thickness of the burl portion can be made not too much thicker than the thickness of the net leg portion (non-burl portion).

In the case of the knit fabric with a knot at the burl portion such as the double sheet bend net, the burl portion contacts the road surface before the net leg portion contacts the road surface and therefore, is intensively subjected to a stress, resulting in a possibility to start abrasion from the burl portion to shorten the time until it is damaged.

The knotless knit fabric is more preferable among the knit fabrics without a knot at the burl portion. Typical examples of the knit fabric, without a knot at the burl portion include a knotless net and a raschel net, and the knotless net is more preferable than the raschel net. It is preferable that the fibers forming a strand are converged in order to improve an abrasion resistance of the strand. Therefore, in this point, the knotless net has better convergence than the raschel net. Examples of the knotless net include knotless nets such as a cross-through shaped net (Fig. 5), a zigzag shaped net, a honeycomb shaped net, and the like. In the case of the honeycomb shaped knotless net among the above examples, such a construction can be readily achieved that two sides among the six sides forming the honeycomb mesh are oriented to a direction orthogonal to a driving direction of a vehicle (hereinafter referred to as an orthogonal-to-driving direction) (for example, the sides are formed knitted into a ring shape and the ring is made so as to correspond to a tire tread). If the sides (strands) are arranged in the orthogonal-to-driving direction, it becomes preferable since the net comes to be excellent in the braking performance and the hill-climbing performance. Further, since the two sides formed into the burl portions are thicker than the other four sides formed into the net leg portions in the honeycomb shaped knotless net, the strand jamming effect will be enhanced against the road surface covered by ice and snow if the two sides formed into the burl portions are arranged in the orthogonal-to-driving direction (if the two sides are knitted into the ring shape as described above, the two sides as the burl portions are arranged in the orthogonal-to-driving direction). Therefore, it becomes preferable since the honeycomb shaped knotless net comes to be excellent in the braking performance and the hill-climbing performance.

In addition, in the tire chain made of a knit fabric according to the present invention, a single fiber fineness of the main material yarn used in the knit fabric structure is preferably 5 dtex or more and less than 90 dtex. Here, the above "main material yarn" means a kind of fiber which occupies more than 50 mass% of the entire strands forming the tire chain made of a knit fabric main body in mass rate. More specifically, it is preferable in the present invention that the kind of fiber having the single fiber fineness 5 dtex or more and less than 90 dtex occupies more than 50 mass% in the strands forming the tire chain made of a knit fabric.

As to the performances required for the installation type tire chains, the above-described braking performance and the hill-climbing performance on the ice and snow are exemplified, as well as the excellent durability while the vehicle is driving on a wet road without ice and snow or on a dry road is also required. This is because, when the vehicle is driving on the ice and snow, not a large deterioration would occur in the tire chain; however, when the vehicle is driving on the normal road which is not covered by ice and snow, the tire chain suffers a large damage since friction or the like becomes larger. Even while the vehicle is driving on an ice and snow covered road, the entire road surface is not always covered by ice and snow, for example, a normal asphalt road surface appears if the vehicle comes into a tunnel. Therefore, the tire chain is required for the excellent durability.

With regard to this point, if the single fiber fineness of the knit fabric (knit fabric structure) forming the portion on a tire contact patch (portion covering the contact patch to ground of a tire) is 5 dtex or more, strength per a single yarn is sufficient, such that such a knit fabric is preferable since it shows the resistivity against the friction with the road surface even on the wet road and on the dry road, namely, it is not scissile. As described above, the knit fabric preferably has the single fiber fineness of 10 dtcx or more and, and, more preferably has the single fiber fineness of 20 dtex or more, in view of the strength of the single yarn.

As described above, if the fineness of the fiber is made larger, the durability will improve. However, in the case of too thick fiber, i.e., the single fiber fineness is 90 dtex or more, since the fiber becomes rigid, the foldability as the tire chain product becomes slightly lower, thereby inviting a possible deterioration of storage property. Further, if the single fiber fineness is too large, a conformability of the tire chain with regard to the tire surface tends to be deteriorated while the tire chain is installed to a tire, thereby inviting a concern of coming-off of the tire chain while the vehicle is driving. In view of the storage property and the conformability with respect to the tire surface, it is preferable that the single fiber fineness is less than 90 dtex as it is mentioned above, and more preferably, less than 60 dtex, and further preferably, less than 50 dtex.

The above single fiber fineness is a value required for a loosened yarn from a strand forming the knit fabric structure.

Incidentally, it is one of the basically required characteristics that the tire chain would not come off from the tire while a vehicle is driving. It is not only in the tire chain made of a knit fabric, but the tire chain is also subjected to a centrifugal force because it rotates together with a tire while the tire rotates and thereby tends to blow up. At the time, if the fixing member which fixes the tire chain has a stretching property, and if the centrifugal force is extremely large, the fixing member having the stretching property stretches and may invite a concern of coming off at worst.

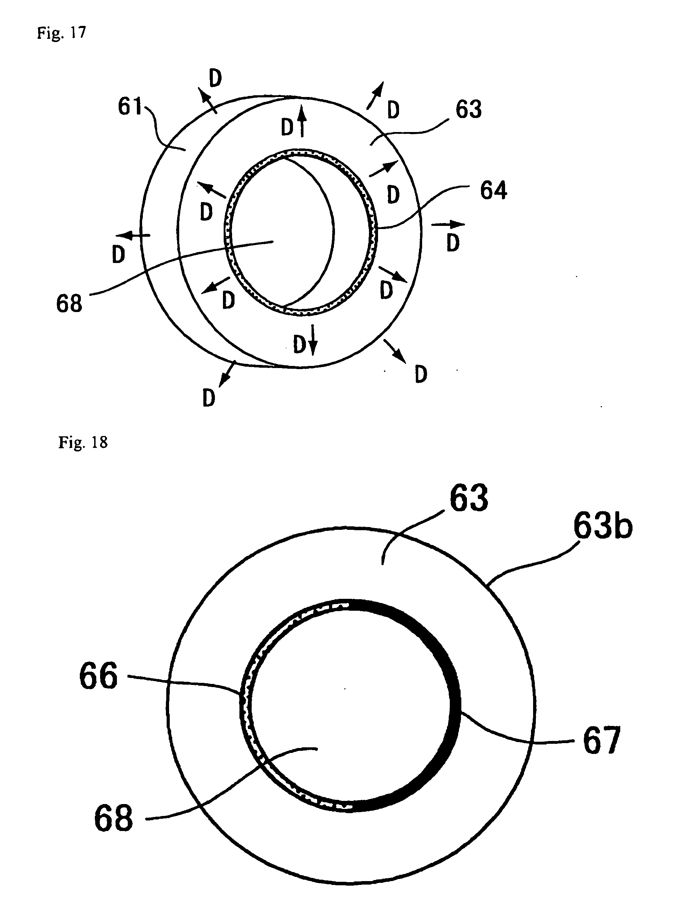

For example, as it is illustrated in Fig. 17 (a perspective view of a tire chain for the sake of an explanation of an objective problem of the tire fixing member), such a tire chain is proposed as the one considering an operability in attaching/detaching the tire that a doughnut-shaped inner cloth 63 is provided at an inside side surface of the tire (back side surface) in a manner continuous from a portion on a tire contact patch 61, and the entire circumference of an opening edge portion of the inner cloth 63 is provided with a rubber band 64. In such a tire chain, the rubber band 64 of the inner cloth 63 is stretched to widen an opening 68 and thereby the tire chain can be installed to the tire in the outside (obverse side) direction, resulting in an easy attachment/detachment of the tire chain. However, in the case of this tire chain, there may be such a concern that the rubber band 64 stretches so as to widen the opening 68 (arrow D) by using the centrifugal force according to a rotation of the tire while the vehicle is driving, the opening edge rises on the tire tread portion, and thereby the tire chain comes off.

In order to prevent the stretching of the rubber band 64, there is such a method that the tire chain is fixed by using a bonding body such as a wire or the like after the tire chain is installed to the tire. However, the use of the wire may decrease the light weight property which is an advantage of the tire chain made of a fiber.

The inventors made a keen examination as to the above-described point, and as a result, have a knowledge that, with the following configuration, a tire chain hardly coming off from the tire can be obtained even if the tire chain is subjected to the centrifugal force according to the rotation of the tire as well as it can keep the light weight property.

In other words, the tire chain made of a knit fabric according to the preferred embodiment of the present invention includes: an inside surface portion corresponding to the inside side surface of a tire; wherein the inside surface portion is continuous from the knit fabric structure (portion covering the contact patch of the tire) at the outer circumferential edge portion as well as an opening portion is formed at a center of the inside surface portion; and the inside surface portion includes a first string member for expanding/restoring the opening area arranged along the circumferential edge of the opening in order to attach/detach the tire chain, and a second string member which connects at least a point X of the first string member with at least a point Y on the outer circumferential edge of the inside surface portion or a vicinity thereof for restraining the centrifugal force affecting the first string member when the tire is driven to rotate. In other words, the preferable tire chain made of a knit fabric according to the preferred aspect of the present invention includes: an inside surface portion including an opening portion at a center thereof and a first string member and a second string member; the first string member is arranged along a circumferential edge of the opening portion to expand/restore an opening area in order to attach/detach the tire chain to/from the tire; a point X is provided at least at a point of the first string member and a point Y is provided at least at a point of an outer circumferential edge of the inside surface portion or a vicinity thereof; and wherein the second string member is connected to both of the point X and the point Y (connects the point X with the point Y) to restrain a centrifugal force affecting the first string member while the tire is driven to rotate.

With the above configuration, since there are present an expandable portion and a non-expandable portion at the opening portion, the opening portion expands not into a circular shape but into a non-circular shape when the opening portion is subjected to the centrifugal force according to the rotation of the tire. With the non-circular shape expansion, a narrower portion of the non-circular shape is hooked to the side surface of a tire and thereby the tire chain hardly comes to come off due to the centrifugal force.

As illustrated in Fig. 18 (a side view illustrating a reference example of the inside surface portion of the tire chain), in the tire chain in which half of the circumferential edge of the opening portion is made of an elastic string 66 and the remaining half is made of a nonelastic string 67, the elastic string 66 stretches while the nonelastic string 67 does not stretch when the tire chain is affected by the centrifugal force according to the rotation of a tire, and thereby the opening 68 expands almost in a radial direction and the tire chain sometimes comes off. With this tire chain, it has been confirmed by a test that the tire chain comes off from the tire at the number of rotation of the tire corresponding to a vehicle speed of 100 km/hr., (vehicle used in the test: ordinary motor vehicle ALLION (manufactured by TOYOTA MOTOR CORPORATION)).

To the contrary, as described above, in the case of the tire chain having the second string member which connects the point Y at the outer circumferential edge of the inside surface portion or at the vicinity thereof with the point X on the first string member at the opening portion, the tire chain hardly comes off even when the tire chain is subjected to the centrifugal force.

Further, it is more preferable that the tire chain is designed such that the point Y is positioned at an end portion of the cylindrical body (knit fabric structure) and the second string member is connected to this knit fabric structure. With such a configuration, when the knit fabric structure (cylindrical body) receives a force to expand the knit fabric structure in a radial direction by a centrifugal force according to the rotation of the tire, the expanding force is directly transmitted to the second string member and thereafter transmitted to the first string member, thereby enabling to strongly suppress the expansion of the first string member. A specific example of such a configuration is given that the inside surface portion is connected (for example, stitched) to an end portion of the cylindrical body (knit fabric structure) at the outer circumferential edge portion of the inside surface portion, at the time, the second string member is directly connected (stitched) to the end portion of the knit fabric structure (the connection point is the point Y).

In the inside surface portion of the present invention, the first string member may be made of the elastic string in its entirety, and a portion of the first string member may be made of the nonelastic string and the remaining portion of the first string member may be made of the elastic string. In any way, since the first string member is arranged at the circumferential edge of the opening portion to expand/restore the opening area in order to attach/detach the tire chain to/from the tire, the first string member at least partially includes the elastic string.

The second string member may be made either one of the elastic string or the nonelastic string. The entire or a part of first string member usually expands/shrinks the opening area in the inside surface portion; however, in the case where the second string member is made of the elastic string, the attachment/detachment operation of the tire chain becomes easy since the second string member also can be stretched when the tire chain is attached/detached to/from the tire. On the other hand, in the case where the second string member is made of a nonelastic string, since there is a large force to restrain a uniform expansion of the opening portion and to make the opening portion into the noncircular opening, a control to expand the opening portion into the noncircular shape becomes easy, which is preferable in view of preventing the tire chain form coming off while the vehicle is driving. Further, even if the second string member is made of the nonelastic string, the tire chain may be attached/detached to/from the tire with ease by devising an arrangement of the second string member like an aspect stated below.

Here, the nonelastic string is a woven fabric material or a string-shaped body which shows little stretching property and the examples of the nonelastic string includes a narrow width woven fabric, a braided rope, or the like. Materials or the construction of the nonelastic string is not specified here. Here, the woven fabric material or the string-shaped body which shows little stretching property means that the woven fabric material or the string-shaped body has a rupture elongation of 50% or less, more preferably, 30% or less.

Further, the elastic string, here, is the one which comes to have a stress of 5 N or more when the elastic string of initial length 50 mm is stretched by 100% (i.e., a length is doubled), and to generate a stress of 10 N or more when it is stretched by 200%.

Examples of the elastic string includes a cord rubber which includes a natural rubber or a synthetic rubber as a core material which is covered by polyester or rayon to form a braided rope, in addition to the string made only of the natural rubber and the synthetic rubber. Further, examples of the elastic string include a single thick elastic string, a string made of a plurality of elastic string, or a string made such that the elastic fibers are twisted or braided (for example, twisted polyurethane elastic fibers). When considering the sun fast property, the above-described configuration that the rubber is covered for the sake of protection is preferable.

As stated above, with regard to the installation operation of the tire chain made of a fiber, it is considered that such a method is frequently employed that the tire chain made of a fiber is installed to the tire while the opening portion of the tire chain made of a fiber is expanded to widen it, and therefore, in view of the expansion/restoration of the opening portion, it is desirable that the strength of a tension strength of the elastic string is determined according to a mass of the tire chain made of a fiber actually used. That is, since the centrifugal force differs according to the mass of the tire chain made of a fiber when the tire rotates at the same rotation speed, there is a difference in a tendency to come off. With regard to the elastic string used in the first string member, it is preferable to use the one having a stress of 5 N or more at 100% stretch of the initial length of 50 mm (i.e., the length is doubled). It is more preferable to use the one having a stress of 10 N or more, more preferable, 15 N or more. In view of the come-off prevention effect, more strong type is preferred since it hardly stretches. However, in view of the operation to attach/detach the tire chain made of a fiber to/from the tire, as it becomes stronger, the attachment/detachment becomes harder, such that it is preferable to use the elastic string having a stress of 100 N or less, more preferably, 70 N or less, under the 100% stretching condition.

In the present invention, in the inside side portion, it is also preferable that a portion of the first string member is made of a nonelastic string and the point X resides on a part of the nonelastic string (hereinafter, this structure may be referred to as the $\alpha1$ type).

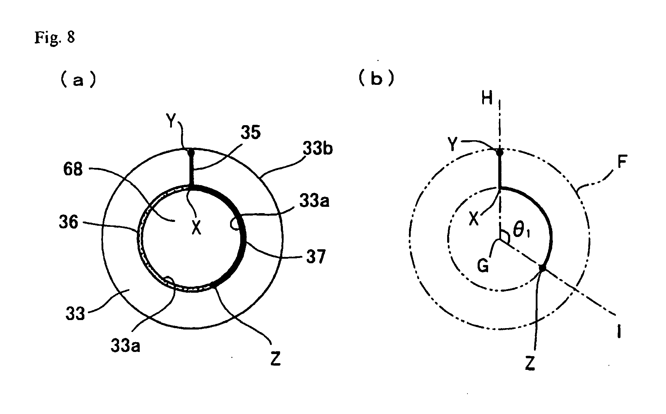

More specifically, for example, as shown in Fig. 8(a) (a view illustrating an example of the $\alpha1$ type in the inside surface portion of the tire chain of the present invention), an example of the $\alpha1$ type includes the one in which a first string member portion 36 made of an elastic string and a first string member portion 37 made of a nonelastic string are arranged along the circumferential edge of the opening portion, and a second string member 35 made of a nonelastic string is provided such that it connects a point X of the first string member portion 37 (in the exemplary view, one end of the first string member portion 37 is the point X) with a point Y in the vicinity to an outer circumferential edge 33b of an inside surface portion 33 (here, the first string member portion 36 is connected with the second string member 35 at the point X).

In the above-described example, even if the opening 68 tends to expand in a radial direction according to the centrifugal force, since there are the second string member 35 made of a nonelastic string and the first string member portion 37 made of a nonelastic string are continuously provided, these portions (35, 37) are pulled at the point Y as the point of support. Therefore, the opening 68 would not expand in the radial direction so as to form a circular shape but the inside side surface of the tire chain is kept to be hooked to the tire such that it covers the inside surface of the tire. Therefore, the come-off of the tire chain hardly occurs. Incidentally, the second string member 35 made of a nonelastic string and the first string member portion 37 made of a nonelastic string may be connected by stitching through a separate string-like member, or may be formed of a single string-like member.

Here, in the $\alpha1$ type, if the other end (point Z) of the first string member portion 37 made of a nonelastic string is too close to the point X, the tire chain come-off prevention effect becomes poor, such that it is preferable that they are positioned at a certain distance. More specifically, as illustrated in Fig. 8(b) (a view illustrating a positional relationship between the point X and the point Z), a line connecting a central axis G of a cylinder F formed by the cylindrical body of the tire chain with the point Y is a line H, and a line connecting the center axis of the cinder with the point Z is a line I, it is preferable that an angle ($\theta_1$) the line H and the line I is 90° or more.

In the above aspect, it is exemplified that there is one pair which are formed into the nonelastic string portion of the first string member and the second string member; however, there may be a plurality of pairs, and the point X may be on a portion of respective nonelastic string (hereinafter, the one having three pairs may be referred to as the $\alpha3$ type).

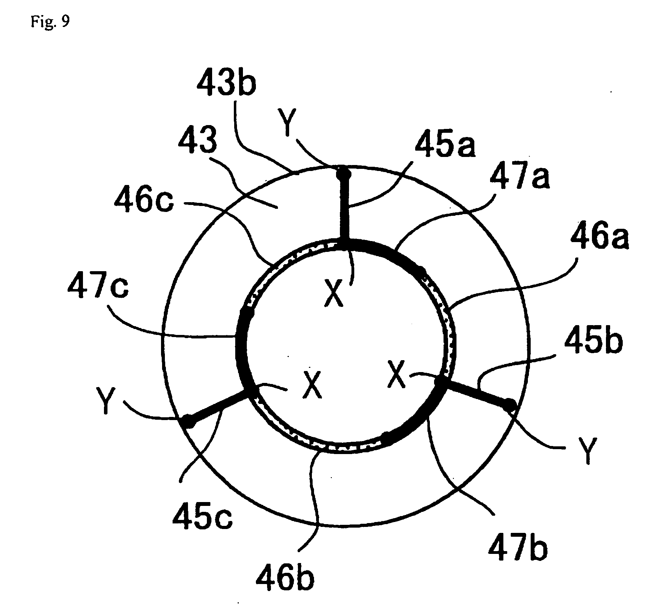

More specifically, for example, as illustrated in Fig. 9 (a view illustrating an example of the $\alpha3$ type aspect in the inside surface portion of the tire chain of the present invention), an example of the $\alpha3$ type includes the one in which a first string member portion 46a made of an elastic string and a first string member portion 47a made of a nonelastic string are provided and a second string member 45a made of a nonelastic string is arranged such that a point X of the string member portion 47a (in the exemplary illustration, one end of the first string member portion 47a becomes the point X) is connected to a point Y in the vicinity of an outer circumferential edge 43b of the inside surface portion 43, and three pairs of them (a pair of 45a, 47a, and 46a; a pair of 45b, 47b, and 46b; a pair of 45c, 47c, and 46c) are arranged such that the respective first string member is arranged along the circumferential edge of the opening portion at every 120° (here, the first string member portions 47a, 47b, 47c are connected with the corresponding one of the second string portions 45a, 45b, 45c at points X, respectively).

In the above-described example, even if the opening 68 tends to expand in a radial direction according to the centrifugal force, since there are the second string members 45a, 45b, 45c made of a nonelastic string and the first string member portions 47a, 47b, 47c made of a nonelastic string provided in a corresponding continuous manner, these portions are pulled at the points Y as the point of supports, and therefore, the opening 68 would not expand in the radial direction so as to form a circular shape but the tire chain is kept to be hooked to the tire such that it covers the inside surface of the tire. Therefore, the come-off of the tire chain hardly occurs.

Further, in the present invention, the tire chain may includes two pairs of the nonelastic string portion of the first string member and the second string member.

In addition, in the present invention, it is preferable that the inside surface portion includes a ring material at the point X, and one end of the first string member is connected to the ring material as well as the other end of the first string member in connection with the second string member is inserted into the ring material. This aspect is a variation of the α1 type and α3 type. The aspect will be explained below with the Fig. 8 (a). The aspect includes a string material that the second string member 35 and the first string member portion 37 are connected to each other (hereinafter, it may be referred to as the string material 35 to 37), wherein the ring material is connected at a portion of the point X of the first string member portion 36 and the string material 35 to 37 is inserted into the ring of the ring material. According to the aspect, the string material 35 to 37 may be made of the elastic string (i.e., the entireties of the first and the second string members may be made of the elastic string).

According to the present invention, in the inside surface portion, it is preferable that the first string member is made of the elastic string and the nonelastic string, two points X reside on the elastic string, and the second string members are connected to each of the points X such that the second string members extend in a mutually crossing direction (hereinafter, one having the above structure may be referred to as the Q type).

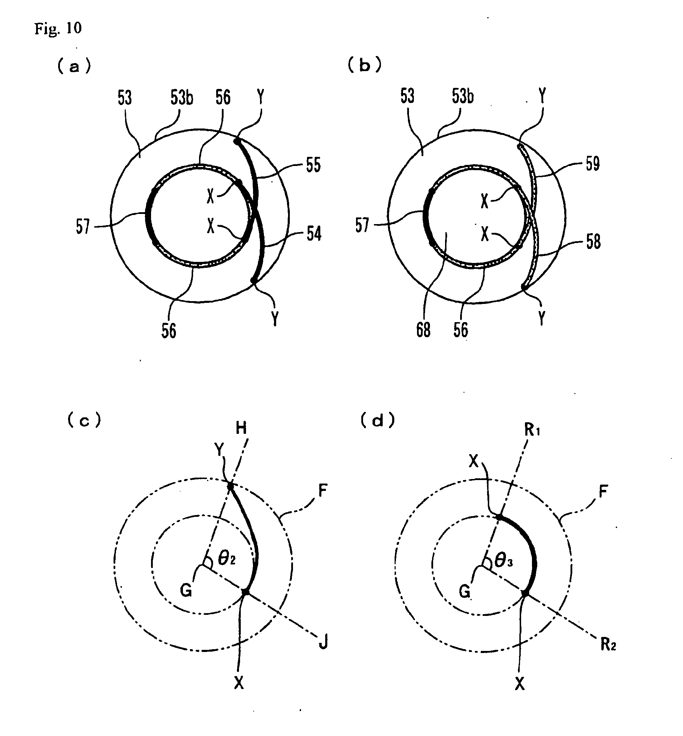

More specifically, for example, as illustrated in Fig. 10(a) (a view illustrating an example of the Q type aspect in the inside surface portion of the tire chain of the present invention), an example of the Q type includes the one in which a first string member portion 56 made of an elastic string and a first string member portion 57 made of a nonelastic string are provided along a circumferential edge of the opening portion, and second string members 54, 55 made of a nonelastic string are arranged such that two points X on the first string member portions 56 made of an elastic string are connected to the corresponding two points Y in the vicinities of an outer circumferential edge 53b of the inside surface portion 53 (incidentally, the points X of the first staring member portions 56 are connected to the corresponding second string members 54, 55, respectively), and the two second string members 54, 55 are arranged to cross each other. Further, as illustrated in Fig. 10(b) (a view illustrating another example of the Q type aspect in the inside surface portion of the tire chain of the present invention), another example of the Q type includes the one in which second string members 58, 59 made of an elastic string may be provided instead of the second string members 54, 55 made of a nonelastic string.

In the above-described Q type tire chain, even if the opening 68 tends to expand in a radial direction according to the centrifugal force, since there are the first string member portion 57 made of an nonelastic string and second string members 54, 55 (Fig. 10(a)), or the first string member portion 57 made of a nonelastic string and second string members 58, 59 (Fig. 10(b)), the first string member portion 57 would not stretch and the second string members 54, 55, 58, 59 are pulled at the points Y as the points of support, and therefore, the opening 68 would not expand in the radial direction so as to form a circular shape but the tire chain is kept to be hooked to the tire such that it covers the inside surface of the tire. Therefore, the come-off of the tire chain hardly occurs.

Here, with regard to the positions of the points X and the points Y of the crossed second string members, if distances between the points X and the points Y are too close to each other in the respective relationship, the tire chain come-off prevention effect becomes poor, such that it is preferable that they are positioned at a certain distance. More specifically, as illustrated in Fig. 10(c) (a view illustrating a positional relationship between the point X and the point Y), a line connecting the central axis G of the cylinder F formed by the cylindrical body of the tire chain with the point Y is a line H, and a line connecting the central axis of the cylinder with the point X is a line J, it is preferable that an angle $(\theta_2)$ between the line H and the line J is 45˚ or more.

Further, with regard to positions of the two points X, if a distance between the point X and the point X is too close to each other, the tire chain come-off prevention effect becomes poor, such that it is preferable that they are positioned at a certain distance. More specifically, as illustrated in Fig. 10(d) (a view illustrating a positional relationship between two points X), a line connecting a central axis G of a cylinder F formed by the cylindrical body of the tire chain with one of the points X is a line $R_1$, and a line connecting the central axis of the cylinder with the other point X is a line $R_2$, it is preferable that an angle $(\theta_3)$ between the line $R_1$ and the line $R_2$ is 45˚ or more.

In addition, in the present invention, it is preferable that, in the inside surface portion, the entirety of the first string member is made of the elastic string, points X reside on four points of the first string member, and each of the second string members is connected to the corresponding one of the two pairs of adjacent points X, respectively, such that the second string members crosses to each other (hereinafter, the one having the above structured may be referred to as the XO type).

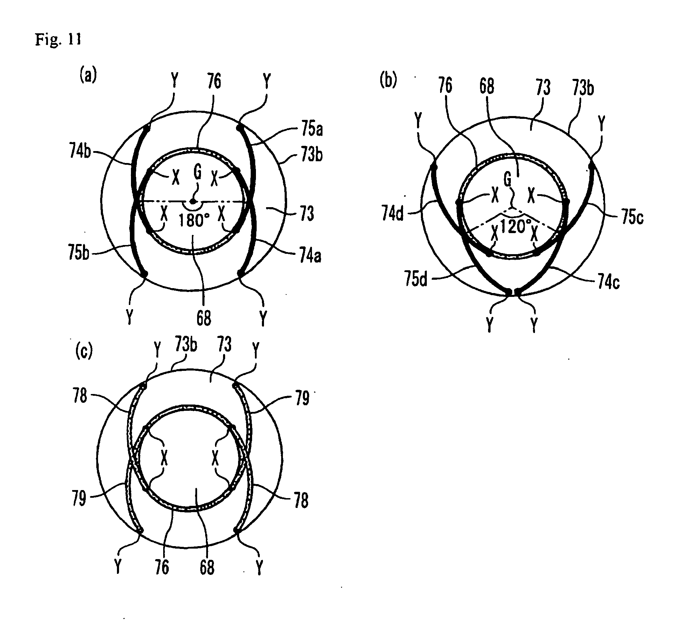

More specifically, for example, as illustrated in Fig. 11(a) (a view illustrating an example of the XO type aspect in the inside surface portion of the tire chain of the present invention), an example of the XO type aspect includes the following aspect. Namely, a first string member 76 made of an elastic string is arranged along the entire circumferential edge of the opening portion, there are four points X on the first string member 76, and also there are four points Y in the vicinity of an outer circumferential edge 73b of an inside surface portion 73. Then, the two of the adjacent point X and point Y are paired, and second string members 74a, 75a (74b, 75b) made of a nonelastic string, connecting the point X with the corresponding point Y, respectively, are arranged so as to cross to each other. With regard to a positional relationship between the pairs of points of the two second string members arranged so as to cross to each other, they may take various positional relationship, such as they may be positioned taking an angle of 120˚ (240˚) (i.e., a pair of the two second string members 74c, 75c arranged so as to cross to each other and a pair of the two second string members 74d, 75d arranged so as to cross to each other are positioned at an angle of 120˚) as illustrated in Fig. 11(b) (a view illustrating another example of the XO type aspect in the inside surface portion of the tire chain of the present invention) or may be positioned taking an angle of 150˚ (210˚), in addition to the opposed position (at a position of 180˚) as illustrated in Fig. 11(a). A preferable positional relationship between the pairs of points is between 90˚ and 270˚.

Further, as illustrated in Fig. 11(c) (a view illustrating further another example of the XO type aspect in the inside surface portion of the tire chain of the present invention), the second string members 78, 79 made of an elastic string may be used in stead of the second string members 74a, 75a, 74b, 75b made of a nonelastic string. Also, with regard to the arrangement of the pairs of points of the two second string members 78, 79 made of an elastic string, arranged so as to cross to each other, it is not limited to the positional relationship at the angle of 180˚, but may be a positional relationship at an angle of 120˚ (240˚) or the like. A preferable positional relationship is at an angle between 90˚ and 270˚.

Also, in the case of these XO type tire chain, even if the opening 68 tends to expand in a radial direction according to the centrifugal force, since there are the second string members arranged so as to cross to each other, these second string members are pulled at the points Y as the points of support, and therefore, the opening 68 would not expand in the radial direction to form a circular shape but the inside surface portion of the tire chain is kept to be hooked to the tire such that it covers the inside surface of the tire. Therefore, the come-off of the tire chain hardly occurs.

Here, in the XO type, with regard to the points X and the points Y of the second string member arranged so as to cross to each other, if they are positioned too close to each other, the tire chain come-off prevention effect becomes poor, such that it is preferable that they are positioned at a certain distance. More specifically, as illustrated in Fig. 10 (c), a line connecting a central axis G of a cylinder F formed by the cylindrical body of the tire chain with the point Y is a line H, and a line connecting the central axis of the cylinder with the point X is a line J, it is preferable that an angle ($\theta_2$) between the line H and the line J is 45˚ or more.

Further, with regard to positions of the points X of the two second string members which are paired to form a crossing point, if a distance between the point X and the other point X is too close, the tire chain come-off prevention effect becomes poor, such that it is preferable that they are positioned at a certain distance. More specifically, as illustrated in Fig. 10(d) (a view illustrating a positional relationship between the two points X), a line connecting a central axis G of a cylinder F formed by the cylindrical body of the tire chain with one of the points X is a line $R_1$, and a line connecting the center axis of the cylinder with the other one of the points X is a line $R_2$, it is preferable that an angle ($\theta_3$) between the line $R_1$ and the line $R_2$ is 45˚ or more.

According to the present invention, it is preferable that the tire chain includes the inside surface portion corresponding to the inside side surface of the tire, wherein the inside surface portion is continuous with the cylindrical body (a portion covering the contact patch of a tire) at an outer circumferential edge portion as well as includes an opening portion at a center thereof, wherein the inside surface portion includes more than two string members which are made only of elastic string or which are made of the elastic string and the nonelastic string being continuous to each other, wherein these string members are formed into a U-shape (hereinafter, the string member may be referred to as the U-shaped string member) and are arranged so as to cross to each other at least at an angle of 90˚, a curved surface portion thereof being positioned on the circumferential edge of the opening portion, both ends of each of the string members being connected to an outer circumferential edge of the inside surface portion or the vicinity thereof (hereinafter, the connecting portion may be referred to as a point L) (incidentally, hereinafter, the one having the above structure may be referred to as the U type).

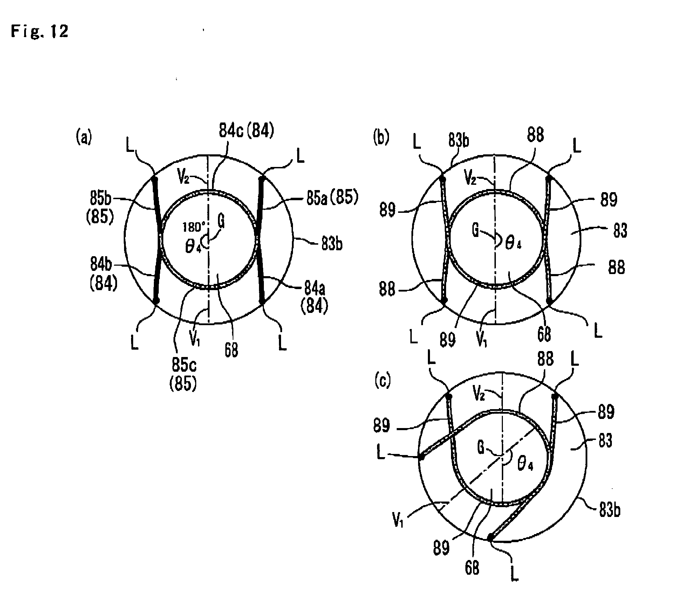

More specifically, for example, as illustrated in Fig. 12(a) (a view illustrating an example of the U type aspect in the inside surface portion of the tire chain of the present invention), an example of the U type aspect includes a U-shaped string member 84 that two nonelastic string portions 84a, 84b are continuously connected through a nonelastic string portion 84c, and a U-shaped string member 85 that two nonelastic string portions 85a, 85b are continuously connected through a nonelastic string portion 85c, wherein these U-shaped string members 84, 85 are arranged such that they are positioned at an angle of 90˚ or more(180˚ in an example in Fig. 12(a)) and they crosses to each other. Then, the portions of the elastic string portions 84c, 85c which are the curved surface portions of the U-shaped string members 84, 85 are positioned on the circumferential edge of the opening portion, and both ends of each of the U-shaped string members 84, 85 are connected (points L) to an outer circumferential edge of the inside surface portion or in the vicinity thereof.

Further, as illustrated in Fig. 12(b) (a view illustrating another example of the U-shaped aspect in the inside surface portion of the tire chain of the present invention), the string members made only of the elastic string may be used for the U-shaped string members 88, 89. In other words, the aspect may be configured such that the two pieces of the U-shaped elastic strings (the U-shaped string members 88, 89) are oppositely arranged, i.e., are faced to each other, and the circular portion formed by those elastic strings are positioned at the circumferential portion of the opening.

Incidentally, the above-described "so as to cross to each other at least at an angle of 90˚" is explained below with reference to Fig. 12(a). It means that an angle ($\theta_4$) between a center line $V_1$ in a longitudinal direction of the U-shaped string member 84 itself and a center line $V_2$ in a longitudinal direction of the U-shaped string member 85 itself becomes 90˚ or more. In the illustrative example, both of the center lines $V_1$ and $V_2$ pass through the central axis G of the cylinder F formed by the cylindrical body of the tire chain.

In the examples of Figs. 12(a) and 12(b), the angle $\theta_4$ is exemplified as 180˚; however, the angle is not limited thereto. The position may be at an angle of 120˚ (240˚) (see, for example, Fig. 12(c)).

The tire chain made of a knit fabric according to the present invention, as described above, has such advantages that it is excellent in the braking performance and the hill-climbing performance while a vehicle is driving on the ice and snow covered road surface in winter and it show a good durability, in addition to such advantages, which comes from a property of being made of a fiber, that it is light in weight and it can be folded into a compact size and therefore has an excellent storage property.

BRIEF DESCRIPTION OF THE DRAWINGS

Fig. 1 is a perspective view of the tire chain made of a knit fabric according to a first embodiment of the present invention when it is installed to a tire, viewed from an obverse side of the tire.

Fig. 2 is a perspective view of the tire chain made of a knit fabric according to the first embodiment of the present invention when it is installed to the tire, viewed from a back side of the tire.

Fig. 3 is a schematic view illustrating a knit fabric portion in the tire chain made of a knit fabric of Figs. 1 and 2.

Fig. 4 are partially enlarged schematic views illustrating appearances of knit fabric structures of the tire chain made of a knit fabric as an example of the present invention on a contact patch of the tire, with the tire chain made of a knit fabric installed to tire.

Fig. 5 is a view for explaining a strand width (W).

Fig. 6 is an enlarged view illustrating honeycomb shaped stitches.

Fig. 7 is a schematic view illustrating a knit fabric portion of the tire chain made of a knit fabric according to another embodiment of the present invention.

Fig. 8(a) is a view illustrating an example of a $\alpha 1$ type embodiment in an inside surface portion of the tire chain of the present invention; and Fig. 8(b) is a view illustrating a positional relationship between a point X and a point Z in the $\alpha 1$ type embodiment.

Fig. 9 is a view illustrating an example of a $\alpha 3$ type embodiment in an inside surface portion of the tire chain of the present invention.

Figs. 10(a) and 10(b) are views illustrating an examples of a Q type embodiment in the inside surface portion of the tire chain of the present invention; Fig. 10(c) is a view illustrating a positional relationship between a point X and a point Y of a crossed second string members; and Fig. 10(d) is a view illustrating a positional relationship of two points X.

Fig. 11 are views illustrating examples of a XO type embodiment in the inside surface portion of the tire chain of the present invention.

Fig. 12 are views illustrating examples of a U type embodiment in the inside surface portion of the tire chain of the present invention.

Fig. 13 is a perspective view illustrating that a tire chain made of a knit fabric according to a third embodiment of the present invention is installed to a tire.

Fig. 14 is a partial diagrammatic view explaining a step that a main body of a tire chain made of a knit fabric, a tire outer cloth, a tire inner cloth, and a rubber band are sewn to be assembled.

Fig. 15 is a perspective view illustrating that a tire chain made of a knit fabric according to a second embodiment of the present invention is installed to a tire.

Fig. 16 is a partial diagrammatic view explaining a step that a main body of a tire chain made of a knit fabric, a tire outer cloth, and an inside surface portion (an inner cloth, a rubber band + a thin width fabric) are assembled.

Fig. 17 is a perspective view of the tire chain for explaining an objective problem of the tire fixing member.

Fig. 18 is a side view illustrating a reference example as to the inside surface portion of the tire chain.

BEST MODE FOR CARRYING OUT THE INVENTION

<First and Second Embodiments>

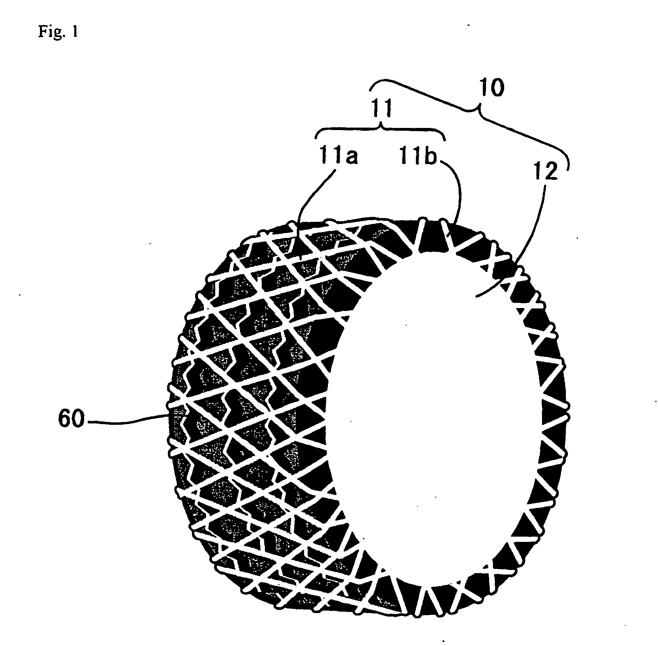

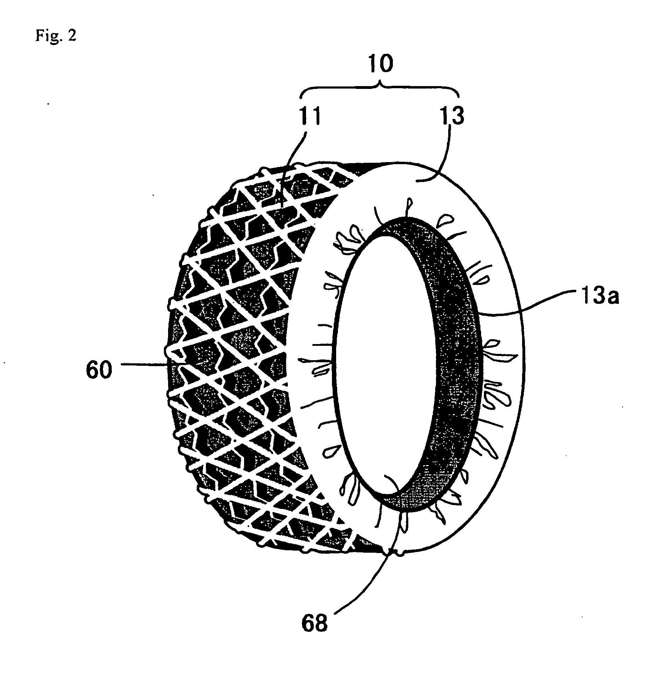

Figs. 1 and 2 are perspective views illustrating that "a tire chain made of a knit fabric" 10 according to a first embodiment of the present invention is installed to a tire 60. Fig. 1 is a view viewed from an obverse side of the tire 60, and Fig. 2 is a view viewed from a back side of the tire 60.

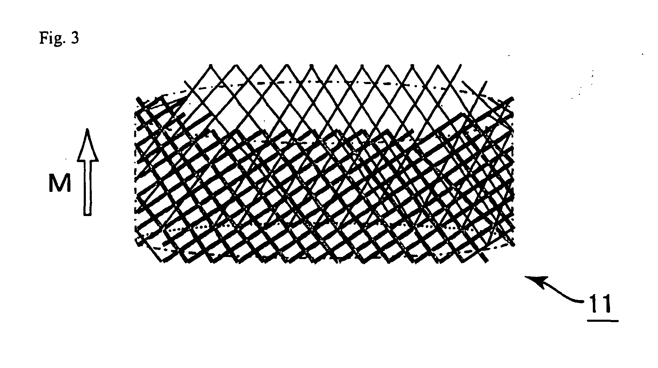

The tire chain made of a knit fabric 10 has such a configuration that an outer cloth 12 matching to an obverse side (outer side) surface of the tire and an inner cloth (inside side surface portion) 13 matching to the back side (inner side) surface of the tire are attached to a knit fabric portion 11 (tire chain main body) formed into a ring shape (cylindrical shape) matching to a contact patch of the tire (Fig. 3: a schematic view illustrating the knit fabric portion 11 in the tire chain made of a knit fabric 10 of the first embodiment). The knit fabric portion 11 (tire chain main body) is made into a knotless net (diamond mesh). A knotless net kitting machine is preferred to be used in knitting the knit fabric portion 11.

The inner cloth 13 is formed such that the one longer side (corresponding to an inner circumferential end portion 13a) of a rectangle-cut cloth is shrunk and the other longer side is sewn to one end of the ring-shaped knit fabric portion 11 as well as shorter sides are sewn to each other to finally make its appearance into a doughnut shape. The inner circumferential end portion (circumferential edge of the opening portion) 13a is provided with an elastic member (not shown) such as a rubber band or the like, and thereby an original size of the opening 68 can be expanded/restored. Upon installation of the tire chain made of a knit fabric 10 to the tire 60, the elastic member is stretched to extend and widen the inner circumferential portion 13a, thereby slipping under the tire 60, and then the tire chain is secured to the tire 60 with a help of the shrinkage force of the elastic member. The outer cloth 12 and the inner cloth 13 may be selected from any one of the knit fabric, the woven fabric, and the nonwoven fabric.

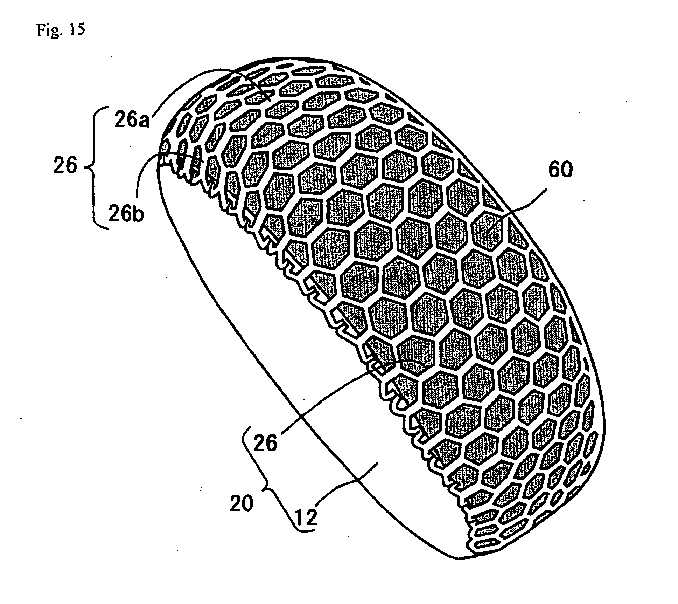

Fig. 15 is a perspective view illustrating that a tire chain made of a knit fabric 20 according to a second embodiment of the present invention is installed to the tire 60, in which a circumferential surface of the tire 60 is seen from the obverse side.

In the tire chain 20 of the second embodiment, a knotless honeycomb meshed knit fabric portion 26 is used in stead of a knotless diamond meshed knit fabric portion 11 in the above first embodiment, but the other structure is identical to that of the first embodiment. A knotless mesh knitting machine may be suitable for knitting the knotless honeycomb meshed knit fabric portion 26.

Incidentally, in the above first and second embodiments, it is shown that clothes different from the knit fabric portions 11, 26 on the contact patch (tire tread) are used in the outer cloth 12 and the inner cloth 13 of the side surfaces of the obverse/back side of the tire. However, the present invention is not limited thereto, but the entire tire chain made of a knit fabric may be configured with, for example, the same knit fabric having the same knit fabric structure as the knit fabric portions 11, 26 on the contact patch.

In the above first and second embodiments, the knit fabric portions 11, 26 are made of knit fabric portions 11a, 26a on the contact patch matching to the portion on the contact patch of the tire (portion covering the contact patch of the tire), and side surface knit fabric portions 11b, 26b matching to the vicinities of the outer circumference at the obverse side of the tire. The knit fabric portions 11a, 26a on the contact patch, however, are not clearly differentiated from the side surface knit fabric portions 11b, 26b. They are formed, when the knit fabric portions 11, 26 are knitted in a manufacturing step, such that the knit fabric portions 11, 26 are knitted slightly wider than it is expected so as to cover the entire portion on the contact patch of the tire, thereby forming the side surface knit fabric portions 11b, 26b. In the illustrative example, there is no knit fabric portion in the vicinity of the outer circumference of the back side surface of the tire; however, the side surface knit fabric portions matching to the vicinities of the outer circumference of the back side surface of the tire may be formed.

In the knit fabric portions 11, 26, when the tire chain made of a knit fabric is installed to the tire 60, a relationship between a space area (S) of a mesh of the knit fabric portions 11a, 26a on the contact patch and a width (W) of a strand of the knit fabric satisfies the following formula (1).

$$2 \leqq S^{1/2}/W \leqq 15 \qquad \cdots (1)$$

A thickness of a burl portion of the knit fabric portions 11a, 26a on the contact patch is three times or less as a thickness of a net leg portion of the knit fabric.

It is preferable that a fineness of the strands of the knit fabric portions 11, 26 (a net leg portion 16 in the diamond meshed knit fabric portion 11, a net leg portion 16 and an elongated burl portion in the honeycomb meshed knit fabric portion 26) is between 5,000 and 120,000 dtex, which shows a good durability. The fineness is more preferably between 20,000 and 100,000 dtex, and further preferably, between 40,000 and 80,000 dtex.

According to the strand fineness, the space area (S) of a mesh varies even when sizes of meshes (a length of a side, $C_1$ and $C_2$ as indicated in Fig. 4) are the same. In order to make the tire chain excellent in weight saving and compactification, it is preferable that the strand fineness is made smaller while the mesh is made larger. However, it would be a disadvantage in view of the braking performance. Further, in order to improve the braking performance, there is a suitable size of the strand fineness and the size of the mesh for optimizing the strand jamming effect against snow by a own weight of a vehicle, while the contact area of the strand on the road surface is made larger. With regard to this point, good braking performance and hill-climbing performance can be demonstrated by satisfying the above formula (1).

Incidentally, the size of the mesh can be evaluated with a length of a side of the mesh when the tire chain made of a knit fabric is installed to a tire, and the length of a side of the mesh is a length between a center line and a center line of the strand width (for example, $C_1$, $C_2$, $C_3$ indicated in Fig. 4).

It is preferable that the length of a side of the mesh ($C_1$, $C_2$, $C_3$ indicated in Fig. 4) is 5 mm or more, more preferably, 15 mm or more, based on an aspect of flakiness of the ice and snow attached to the tire chain made of a knit fabric. With regard to the length of the net leg portion 16 forming the mesh, the net leg portions 16 forming the mesh may have the same length (for example, $C_1$, $C_2$, $C_3$ indicated in Fig. 4 have the same length), or may have the different lengths (for example, $C_1$, $C_2$, $C_3$ indicated in Fig. 4 have the different lengths). Further, a shape of the mesh may be any shape including a shape having an elongated burl portion 15 such as a honeycomb shape in addition to a square shape (a diamond shape) and a rectangular shape. The shape of the mash is not limited to any shape.

A material yarn forming the strand of the knit fabric portions 11, 26 may be a twist or a textured yarn. Further, the material yarn may be either one of the multifilament or the monofilament; however, preferable one is the multifilament in view of an easiness of knitting processing and yarn strength. In the case of the multifilament, a cross section shape of the multifilament is not limited to any shape, i.e., it has any cross section shape such as a circular-shaped cross section, a flat-shaped cross section, a triangle-shaped cross section, or the like.

Further, a kind of a fiber used as a main material yarn is not limited to anyone; however, examples of the main material yarn include a polyamide fiber and a polyester fiber. Those fibers are preferable in view of the economical reason since they are in general use. Further, the main material yarn means the material which occupies 50 mass% or more of the entire strand. The knit fabric portion 11 may be formed by using, for example, 100 mass% polyester fiber or 100 mass% polyamide fiber.

It is preferable that a strength of the main material yarn has a loosened yarn strength of 4 cN/dtex or more, more preferably 5 cN/dtex or more, in view of the abrasion resistance when the vehicle is driving. The above-described "loosened yarn strength" means a strength of a string measured after the strand forming the knit fabric is loosened and, if rubber or resin is attached thereto, the robber and the resin are removed from the yarn material.

High strength fiber may be used as a yarn other than the above main material yarn among the material yarns forming the strand. If the high strength finer is used as a portion of the stand as described above, it will be a preferred embodiment since the abrasion resistance of the entire strand can be improved. More specifically, in the case of the tire chain made of a knit fabric mainly including, for example, the polyester fiber, too much driving on a dry road will cause a cut filament due to the abrasion of the polyester fiber itself, generate fluffing, and finally make a hole, and then arise a possibility of enlargement of the portion. In consideration of a normal use frequency and a normal use condition when using the tire chain, although it is hard that there is a rapid enlargement of the hole, it is preferable to contain the high strength fiber in view of the improvement of the abrasion resistance when assuming a driver who uses the tire chain frequently. In the tire chain containing the high strength fiber, in a process of the above-described destruction of the tire chain happens, the high strength fiber encloses the polyester fiber and thereby the abrasion resistance of the entire tire chain made of a knit fabric can be improved effectively.

It is preferable that an amount of use (content) of the high strength fiber is 2 mass% or more and less than 50 mass% of the entire strand of the knit fabric portion 11. More preferable amount of use of the high strength fiber is 10 mass% or more and less than 40 mass%, and further preferable amount is 20 mass% or more and less than 30 mass%. If the amount of use of the high strength fiber is too small, the above-described abrasion resistance effect owing to the high strength fiber can hardly be demonstrated. On the other hand, if the amount of use of the high strength fiber is too large, the abrasion resistance improves, whereas a product cost increases, which is unpreferable.

Examples of the kinds of the fiber of the high strength fiber include a high strength polyester fiber, a high strength aramid fiber, or the like. Since the tire chain is exclusively used out of doors and is subjected to a strong reflection of snow, the high strength polyethylene fiber excellent in antiweatherability is more preferable. Further, since the high strength polyethylene fiber has a ratio smaller than the polyester fiber or the polyamide fiber, it is effective in a weight saving. The high strength polyethylene fiber, however, is relatively weak against heat, a temperature of the tire chain may rise dramatically when the vehicle with the tire chain is driving on the dry road for a long time. Therefore, the durability of the tire chain is concerned. In view of the above aspect, the above-described polyester fiber or the like is preferable as the main material yarn, containing the high strength polyethylene fiber as a sub material yarn for assisting the polyester fiber.

A preferable fineness of the high strength fiber is 100 dtex or more. In the case of less than 100 dtex, more number of doubling is required for obtaining an optimum fineness, which is not preferable for an economical reason. Further, a single yarn of the high strength fiber is different from that of the polyamide fiber or that of the polyester fiber, i.e., the single yarn of the high strength fiber is often thinner than that of the polyamide fiber or that of the polyester fiber, and therefore, it is concerned that the high strength fiber may be inferior in the strength due to its thinner structure. However, the high strength fiber has a sufficient strength in the single yarn even with such a thinner structure and a ratio to the entire strand is small, there is no need to stick with the single yarn fineness.

By the way, in obtaining the strand made of a yarn having the single fiber fineness and the loosened yarn strength as described above, it is preferable to use a yarn having the single fiber fineness and the strength of the same scope of those of the loosened yarn as the material yarn.

Further, it is preferable to twist the fiber forming the strand. This is because the abrasion resistance of the strand improves according to the twisting step. A twist coefficient k upon twisting the fiber is, preferably, kept within a suitable range independent from the fineness to be used. A twist yarn to be used may be a S twist or Z twist single twist yarn, or may be a yarn made of a final twist and a first twist which are twisted in an opposite twisting direction. In the case of the twist yarn made of the final twist and the first twist, twisted in the opposite twisting direction, has good strand linearity and can minimize a drop down of the strength in a pulling direction, which is preferable. Here, a twist yarn twisted in an opposite twisting direction is such a twist yarn that the final twist is the S twist when the first twist is the Z twist and the final twist is the Z twist when the first twist is the S twist.

In the above case, it is preferable that the twist coefficient k of each of the final twist and the first twist is 30 or more and less than 600. Here, a value of k is calculated by the following formula (2).

$$k = [\text{twist number per centimeter (times/cm)}] \times [\text{fineness (dtex)}]^{1/2} \quad \ldots (2)$$

In the case where the value k is less than 30, the convergent of fibers is not enough. Therefore, there is such a possibility that the fiber becomes scissile and poor in the durability since the fiber as an assembly can not resist the abrasion when the fiber forming the strand contacts the road surface, especially the dry road. On the other hand, in the case where the value k becomes 600 or more, a twist angle becomes too large to loose the linearity of the strand, resulting in that the chain is hardly tight-matches to the obverse shape of the tire when the tire chain is installed to a tire. Therefore, it is not preferable since there are possibilities that tear may occur due to a partially focused stress while a vehicle is driving and that the chain comes off with ease. More preferable value of k is 50 or more and less than 400, and further preferable value of k is 100 or more and less than 300.

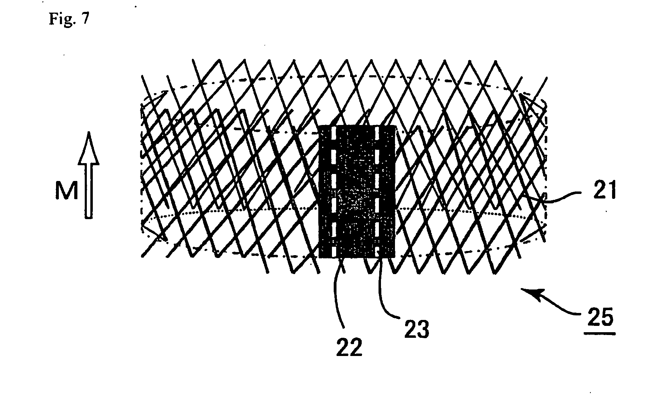

Since the knit fabric contacting the road surface also contacts a tire, it is preferable that there is no junction in view of a comfortableness. Therefore, it is a preferable embodiment that, for example, as illustrated in Fig. 3, the product is knitted into a cylindrical shape to cut it in a cross section to thereby manufacture a tire chain made of a knit fabric. Incidentally, as illustrated in Fig. 7 (a schematic view illustrating the knit fabric portion of the tire chain made of a knit fabric of another embodiment of the present invention), the knit fabric portion may be a flatly knitted knit fabric 21 which is connected to form a cylindrical shape (tire chain main body 25). In Fig. 7, a reference numeral 22 denotes a filler cloth, and a reference numeral 23 denotes a sawing yarn.

The tire chain made of a knit fabric of the present invention may be processed with resin, rubber, or the like for the purposes of an improvement of the abrasion resistance and a sealing effect for preventing the net being cut. Examples of the resin and the rubber include, for example, natural rubber, neoprene rubber, ethylene-propylene-diene-rubber, silicon rubber, polyester resin, polyamide resin, polyester elastomer, polyamide elastomer, polyurethane elastomer, or the like. A preferable amount of the resin or the rubber to be attached is less than 100 mass% with respect to a weight of the knit fabric. If the amount becomes 100 mass% or more, the tire chain becomes heavy and rigid, and therefore, such a tire chain is not preferable in view of the weight saving and the compactification. More preferable amount is 70 mass% or less, and further preferable amount is 50 mass% or less.

<Third Embodiment>

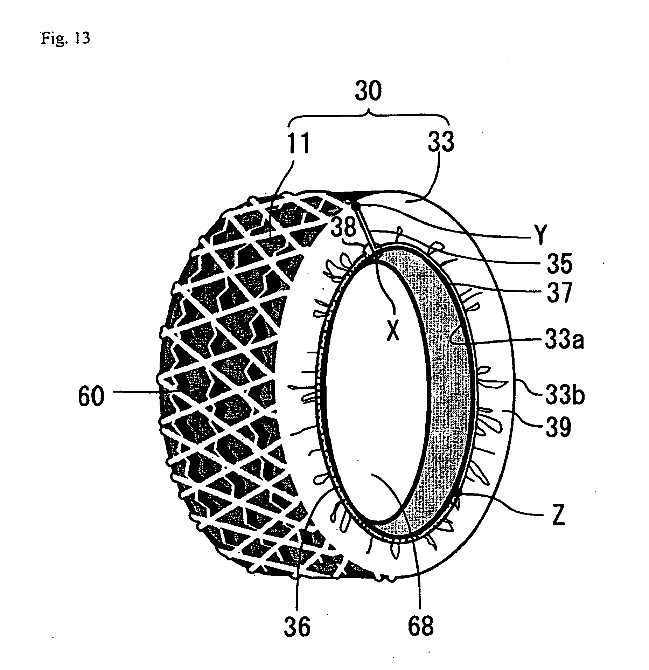

Fig. 13 is a perspective view illustrating that a tire chain made of a knit fabric 30 according to a third embodiment of the present invention is installed to the tire 60, viewing from a back side of the tire 60. Here, the portions provided with the same reference numerals as they are provided in Figs. 2 and 8 are the same component portions.

An inside surface portion 33 of the present embodiment is the $\alpha 1$ type embodiment with the ring shaped material. A second string member 35 and a first string member portion 37 are nonelastic strings formed into one body (for example, a string made of polyethylene) (hereinafter, it may be referred to as the nonelastic string 35 to 37), and another end of the first string member portion 37 is sawn (point Z) with the one end of the first string member portion 36 (for example, the one with a natural rubber core which is covered by the polyester and made into a braided rope shape), to be connected to each other. Further, another end of the first string member portion 36 is provided with a ring made of a synthetic resin (ring-like material) 38 attached thereto, and the nonelastic string 35 to 37 is inserted into the ring 38. Here, the ring 38 is positioned at the point X.

One end of the second string member 35 (a side uncontinuous with the first string member portion 37) is stitched to an inner cloth 39 in the inside surface portion 33 and the knit fabric portion 11. The stitched position (point Y) is an outer circumferential edge portion of the inner cloth 39, and the end position of the knit fabric portion 11.

The inner cloth 39 forms a tube-like space along the circumferential edge of the opening, and the first string member portion 37 and the first string member portion 36 are inserted into the tube-like space.

In the tire chain of the third embodiment, even if the opening 68 tends to expand in a radial direction according to the centrifugal force, since the nonelastic string 35 to 37 comes to be pulled at point Y as the point of support, the opening 68 would not expand in the radial direction to keep the inside surface portion 33 of the tire chain 30 to be hooked to the tire such that it covers the inside surface of the tire 60. Therefore, the come-off of the tire chain hardly occurs.

Further, it is preferable that the ring 38 is fixed to the inner cloth 39 since a transmission efficiency of transmitting the expansion force to the second and first string members becomes efficient when the knit fabric portion (knit fabric structure) 11 is subjected to the force expanding in a radial direction according to the centrifugal force of the rotation of the tire.

Preferably, the ring 38 is not limited to the ring made of a synthetic resin but can be a thin width fabric, a braided rope, or the like, which are used in an annular shape.

In the above first to third embodiments, the outside side surface portion of the tire chain is made of, but not limited to, fabric covering the entirety of the outside surface of the tire. It may have any configuration as far as the mass of the tire chain is not too large. For example, it may have an opening at a center thereof. Alternatively, such a configuration may also be possible that the outside surface portion of the tire chain is made of a plurality of nonelastic strings, which are arranged at opposing corners on the outer circumference of the outside surface of the tire.

<Examples>

Hereinafter, the present invention will be explained into details with reference to examples. However, the present invention is not limited by the following examples but, off course, can be carried out with a proper modification as far as it is in conformity with the above-described and below described summary of the invention. Such modifications should also be encompassed within the technical scope of the present invention.

Initially, various measurement methods used in the following Experimental examples will be described below.

Fineness:

It is measured by a JIS L1013 (1999) 8.3.1 A method.

Yarn strength:

It is measured by a JIS L1013 (1999) 8.5.1 method.

The twist number:

It is measured by a JIS L1013 (1999) 8.13.1 method.

Thickness:

It is measured based on a JIS L1096 (1999) 8.5.1 method. Here, the thickness means a direction of thickness when the tire chain to be measured was installed to a tire for a vehicle. The thickness was measured such that the tire chain was placed stilly on a flat surface, three burl portions (crossing point portions) and three net leg portions (noncrossing point portions) of the strands of the tire chain were cut off, the cut off portions were left for ten seconds under an initial load of 23.5 kPa, and the thickness of those portions were measured. The thickness measurement was performed three times for said every three portions, and an average value (an average value calculated by: three portions x three times = nine measurement values) thereof was considered as the thickness.

Space area (S):

The space area means an area enclosed by the inner sides of the strands (an area indicated by P in Fig. 4 (a portion indicated by dots)) when the tire chain made of a knit fabric is installed to a vehicle tire (at the time, the tire chain is installed such that no space is left between the tire chain and the contact patch of the tire). Further, in the case of the tire chain made of woven fabric, the space area means an area enclosed by strings when the tire chain made of woven fabric is installed to a vehicle tire (at the time, the tire chain is installed such that no space is left between the tire chain and the contact patch of the tire).

Strand width (W):

The strand width means a width at the time the strand width of the tire chain is measure by a caliper (a width indicated by W in Fig. 4) when the tire chain made of a knit fabric or the tire chain made of woven fabric is installed to a vehicle tire such that no space is left between the tire chain and the contact patch of the tire. However, in the case where the strands have thicker points and thinner points as illustrated in Fig. 5 (a view for explaining a measurement point of the strand width (W)), the thicker points were measured by a caliper. As described above, three points were measured and an average value thereof was considered as the strand width.
In the case where there are various strand widths in one mesh as in the case of the honeycomb mesh, the widths of all sides are measured to obtain an average value thereof, and the same measurement is performed at three points to obtain an average value of the three points, thereby considering thus obtained average value as the strand width (W).

Calculation of $S^{1/2}/W$:

In the case of the one basically having uniform meshes in the knit fabric (the one knitted such that a single kind of strand forms meshes of the same shape, or the space area S and the strand width W of the meshes (for example, in the case of the honeycomb mesh, an average of all sides) were basically uniform in each mesh, any three portions were selected to calculate to obtain an average value and thus obtained average value was considered as a value of the $S^{1/2}/W$. In the present invention, the space area (S) of the individual mesh is required to satisfy the above-described formula (1). On the other hand, in the case of the knit fabric of which knitted loop is basically uniform, if any three portions are selected and calculated, a value of each of the meshes can be reflected. Therefore, the above-described measurement method was employed.
Further, in the case where the meshes are not uniformly sized, for example, the knit fabric includes different sizes of meshes, i.e., includes larger meshes and smaller meshes, or the thicknesses of the strands for forming the meshes are different to each other, the $S^{1/2}/W$ is to be calculated for the individual mesh. At the time, the strand width W of the strands forming the mesh to be calculated is used as the strand width W.

Evaluation of the braking performance:

A front drive ordinary vehicle ALLION (manufactured by TOYOTA MOTOR CORPORATION) was used, all of the four tires of the vehicle were 185/70-14 inch summer tires (B391 manufactured by Bridgestone Corporation), and the tire chain made of fiber to be evaluated (the tire chains of the following Experimental examples 1 to 14) were installed to the two front wheels (driving wheels). The vehicle was driven on a compacted snow road around Omachi-Onsenkyo, Omachi-shi, Nagano-ken under a condition of two adults (each person weighting 70 kg) riding on front sheets of the vehicle, clear sky, and the temperature of -3°C, and a distance until the vehicle stops upon braking hard while driving was measured. The above measurement was repeated for three times, and an average value was employed as a value for evaluating the braking performance.

Evaluation of the hill-climbing performance:

A front drive ordinary vehicle ALLION (manufactured by TOYOTA MOTOR CORPORATION) was used, all of the four tires of the vehicle were 185/70-14 inch summer tires (B391 manufactured by Bridgestone Corporation), and the tire chain made of fiber to be evaluated were installed to the two front wheels (driving wheels). The vehicle was driven on a compacted snow road around Aoki-lakeside, Omachi-shi, Nagano-ken under a condition of two adults (each person weighting 70 kg) riding on front sheets of the vehicle, clear sky, and a temperature of -2°C, and a time required for climbing a hill having a slope angle of 4°, and a distance of 30 m from a halt condition was measured. The above measurement was repeated for three times, and an average value was employed as a value for evaluating the hill-climbing performance.

Evaluation of the durability:

A front drive ordinary vehicle ALLION (manufactured by TOYOTA MOTOR CORPORATION) was used, all of the four tires of the vehicle were 185/70-14 inch summer tires (B391 manufactured by Bridgestone Corporation), and the tire chain made of fiber to be evaluated were installed to the two front wheels (driving wheels). The vehicle was driven on a dry road of a go-around course of 13 km/loop around Hikisa-lake lakeside, Hikisako-cho, Shizuoka-ken at about 40 to 50 km/hr., under a condition of two adults (each person weighting 70 kg) riding on front sheets of the vehicle, clear sky, and a temperature of 6˚C, and a distance at which the tire chain was worn into a hole was measured. The above measurement was repeated for three times, and an average value was employed as a value for evaluating the durability. Here, the "hole" means, a hole which is made when a tear occurs at a strand crossing point and a knit construction is damaged in the case of the tire chain made of a knit fabric (Experimental examples 1 to 12, and 14), whereas a hole which is made when a woven construction begins to be damaged in the case of the tire chain made of woven fabric (Experimental example 13).

Come-off prevention performance:

In the first test, whether the inside cloth portion of the tire chain made of fiber to be evaluated rode on a tire tread surface, or came off from the tire while the above-described durability test was carried out was evaluated with a visual check. Results were evaluated as follows: a result was indicated by O if the tire chain never rode on the tire tread, a result was indicated by ∆ if the tire chain rode on the tread at least once, and a result was indicated by x if a tire chain come-off occurred even once, before an end of the durability test.

In a second test, an ordinary vehicle ALLION (manufactured by TOYOTA MOTOR CORPORATION) was used, tires of the vehicle were 185/70-14 inch summer tires (B391 manufactured by Bridgestone Corporation), the tire chain made of fiber to be evaluated were installed to the two driving wheels (front wheels), and the driving wheels were jacked up so as to keep the wheels float in the air. Then, the engine of the vehicle was started to rotate the driving wheels and was gradually accelerated, thereby evaluating according to the number of rotation of the tires at the time the tire chain was riding on the tread. When the number of rotation of the tires indicates 900 rpm (i.e., corresponding to about 100 km/hr.), results were evaluated as follows: a result was indicated by O if the tire chain never rode on the tire tread, a result was indicated by ∆ if the tire chain rode on the tread, and a result was indicated by x if the tire chain came off from the tire.

<Experimental example 1>

Using a 1,100 dtex/24f polyester multifilament having a strength of 6.1 cN/dtex (type 534 manufactured by TOYOBO Co. Ltd.) and of which single yarn has filaments of a circular cross section, six pieces of this filament yarn of 6,600 dtex were paralleled, further six pieces of this paralleled yarn were first-twisted for Z (Z twist) 100 times/m. Two pieces of the 39,600 dtex first twist yarn were final-twisted by the knotless knitting machine for S (S twist) 100 times/m, and thereby such a knotless diamond meshed net fabric was obtained that a length of one side of the mesh was 25.6 mm. The strand fineness was 79,200 dtex.

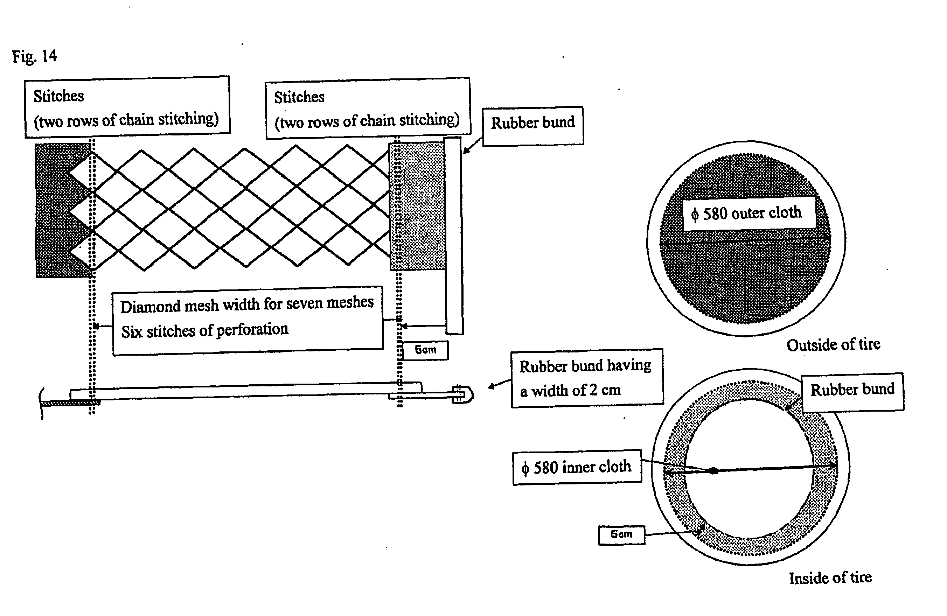

Thus obtained net fabric was cut in a knitting direction at 7 meshes thereof (In a direction of an arrow M of Fig. 7) (a length of the net fabric became 22 cm), and the ends of the net fabric were sewn to each other to form a cylindrical shape having a circumferential length of 180 cm. At the time, a 10 cm x 44 cm sized plain weave fabric (filler cloth 22) using a polyester 1100 dtex yarn (woven density: 28 yarns/2.54 cm in warp and weft) was used for patching an face side and a back side of an abutting portion of the net fabric, and was sewn (Fig. 7, tire chain main body 25). Further, a circular shaped side cloth (outer cloth 12) having a diameter of 58 cm was sewn to the outside of the tire in the tire chain main body (net fabric sewn into a cylindrical shape). Further, a woven fabric cut into a rectangle shape of a 6 cm width and 220 cm length (a plain weave fabric using a polyester 560 dtex yarn (woven density: 50 yarns/2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (a condition where the rubber band is not stretched) was used to be stitched along the other longer side (inner circumferential end portion 13a) of the inner cloth while the rubber band was stretched (a 2 cm width rubber band was folded in half and sandwiches the inner cloth therebetween to stitch it in a double line by a lock stitch) (Fig. 14: a partial view illustrating that the tire chain made of a knit fabric main body, the tire outer cloth, the inner cloth, and the rubber band were stitched to assemble the tire chain (in the illustrative example, the net fabric was cut at seven meshes in the tire width direction)). The above rubber band has a stress of 14 N when it is stretched by 100% of the initial length of 50 mm. Further, with the above configuration, the inner cloth (inner cloth 13) comes to have a doughnut shape having an outer diameter of 58 cm and a width of 5 cm.

As described above, the tire chain made of a knit fabric was obtained. In the tire chain made of a knit fabric of the present Example 1, 94.4% (area ratio) of a portion covering the contact patch of a tire was made of the knit fabric.

Thereafter, the two front wheels (driving wheels) were covered with the tire chain made of a knit fabric of Experimental example 1. Here, 185/70-14 inch-sized summer tires were used for both of the (two) front wheels and the (two) rear wheels.

A driving test was performed on the dry road and the snow-covered road, with the tires covered with the tire chain made of a knit fabric. The result is shown in Table 1. There was a good operability in installing the tire chain made of a knit fabric of Experimental example 1 to the tires. Also, there was a good operability in removing the tire chain made of a knit fabric from the tires after the driving test.

<Experimental example 2>

Using a 1,100 dtex/24f polyester multifilament having a strength of 6.1 cN/dtex (type 534 manufactured by TOYOBO Co. Ltd.) and of which single yarn has filaments of a circular cross section, six pieces of this filament yarn of 6,600 dtex were paralleled, further six pieces of this paralleled yarn were first-twisted for Z (Z twist) 100 times/m. The two pieces of the 39,600 dtex first twist yarn were final-twisted by the knotless net knitting machine for S (S twist) 100 times/m, and a knotless diamond meshed net fabric having a length of a side of a mesh of 25.6 mm was obtained. The strand fineness was 79,200 dtex.

Thus obtained net fabric was cut at seven meshes thereof in a knitting direction (a length of the net fabric became 22 cm), and the ends of the net fabric is sewn to form a cylindrical shape having a circumferential length of 180 cm. At the time, a 10 cm x 44 cm sized plain weave fabric (filler cloth 22) knitted by using a polyester 1100 dtex yarn (woven density: 28 yarns/2.54 cm in warp and weft) was used for patching an face side and a back side of an abutting portion of the net fabric, and was sewn (Fig. 7, tire chain main body 25).

Further, a circular shaped side cloth (outer cloth 12) having a diameter of 58 cm was stitched to the tire chain main body (net fabric sewn into a cylindrical shape) at the outside of the tire.

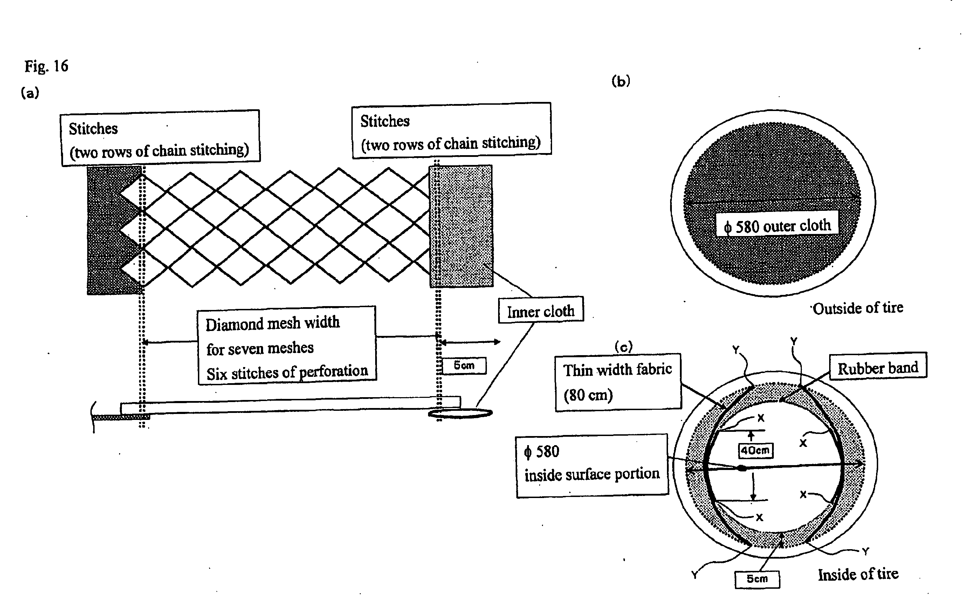

Further, in order to manufacture the XO type inside surface portion as illustrated in Fig. 11(c), the following steps were performed. That is, a woven fabric cut into a rectangle shape of a 12 cm width and a 220 cm length (a plain weave fabric using a polyester 560 dtex yarn (woven density: 50 yarns/2.54 cm in warp and weft)), this rectangle shape fabric was used as an inner cloth to be used for the inside of the tire, and the fabric was folded in half in a width direction to form it into a bag shape with an open end at one longer side. A rubber band having a 2 cm width and a 103 cm length under a natural condition (the rubber band has a stress of 14N when the rubber band is stretched by 100% of the initial length of 50 mm) was prepared, and one end of the rubber band and the other end of the rubber band were superimposed to each other by 3 cm and were stitched to form it into an annular shaped rubber band (first string member 76) having a circumference of 100 cm. The annular shaped rubber band (first string member 76) was provided with two signs of points X which were apart from each other by 40 cm, as well as two another signs of points X which were apart from each other by 40 cm were provided at positions opposing to the former two points X (at positions opposing to the former two points X when the rubber band was formed into a circular shape (position at an angle of 180˚)). Then, the annular rubber band (first string member 76) was inserted into a bag of the inner cloth. On the other hand, four rubber bands of 70 cm which were the same kind as the above mentioned ones were prepared (second string members 78, 79), and one ends of the rubber bands were stitched to the points X, respectively. Then, two pieces of the 70 cm rubber bands (second string members 78, 79) were paired to cross to each other, and the rubber bands were pulled toward the outer circumferential edge 73b of the inside surface portion while keeping them in their original condition (a nonstretching condition) so as not to be loosen, and thereby the other ends thereof were stitched to the side edge portion of the tire chain main body (points Y), respectively. Then, a longer side at a side of the opening of the inner cloth having been made into the bag shape was stitched to the entire circumference of the side edge portion of the tire chain main body (Figs. 16(a) and 16(b) (a partial view for explaining how to assemble the tire chain made of a knit fabric main body, the tire outer cloth, the inside surface portion (the inner cloth, the rubber band + the thin width fabric))). Thus obtained inside surface portion had a doughnut shape having an outer diameter of 58 cm and a width of 5 cm, and thus came to have an XO type rubber band (180˚ type) (Fig. 16(c)). Here, the inside surface portion of the Fig. 16 is the XO type (180˚ type) including the rubber band + thin width fabric; however, the inside surface portion using the rubber band instead of the thin width fabric corresponds to the inside surface portion of Experimental example 2. Further, in Fig. 16(c), the rubber band + the thin width fabric is indicated by a solid line; however, since the portion actually resides in the inner cloth, it can not be seen from the outside.

As stated above, the tire chain made of a knit fabric was obtained. Here, the tire chain made of a knit fabric of Experimental example 2 included the knit fabric by 94.4% (area ratio) of the portion covering the contact patch of the tire.

Then, the two front wheels (driving wheels) were covered by the tire chain made of a knit fabric of Experimental example 2. Here, 185/70-14 inch-sized summer tires were used for all of the (two) front wheels and the (two) rear wheels.

A driving test was performed on the dry road and the compacted snow road, with the tires covered by the tire chain made of a knit fabric. The result is shown in Table 1. Further, there was a good operability in installing the tire chain made of a knit fabric of Experimental example 2 to the tires. Also, there was a good operability in removing the tire chain made of a knit fabric from the tires after the driving test.

<Experimental example 3>

Using a 1,100 dtex/190f polyester multifilament having a strength of 9.3 cN/dtex (type H02 manufactured by TOYOBO Co. Ltd.) and of which single yarn has filaments of a circular cross section, and a 1760 dtex/1560f-SK60 high strength polyethylene multifilament having a strength of 29.0 cN/dtex (DYNEEMA (registered mark) manufactured by TOYOBO Co. Ltd., a single twist yarn A and a single twist yarn B were manufactured as follows. That is, the single twist yarn A was obtained such that a paralleled yarn made of four pieces of the polyester multifilament paralleled with further six pieces of this four paralleled yarn, and three pieces of the above multifilament were paralleled so as to have a ratio of polyester:DYNEEMA = 2:1 with further two pieces of this three paralleled yarn were prepared, and then those were first-twisted for Z (Z twist) 120 times/m (34320 dtex). The single twist yarn B was obtained such that a paralleled yarn made of four pieces of the polyester multifilament with further seven pieces of this four paralleled yarn, and a single yarn made of three pieces of the above multifilament were paralleled so as to have a ratio of polyester:DYNEEMA = 2.1 were used, and those were first-twisted for Z (Z twist) 120 times/m (34760 dtex). These single twist yarn A and single twist yarn B were used to knit a net by the knotless net knitting machine so as to provide the final twist S (S twist) for 100 times/m, 52 shed, and a knotless honeycomb meshed cylindrical net fabric having a length of mesh of net leg portion of 21 mm and a burl portion of 18 mm was obtained. The strand fineness was 69,080 dtex. A mixing rate of the DYNEEMA at the time was 7.6 mass%.

The net fabric was cut at 5 meshes in the knitting direction (in the direction of the arrow M in Fig. 7) (the net fabric came to have a length of 25 cm) (tire chain main body). Further, a circular shaped side cloth (outer side cloth 12) having a diameter of 58 cm was stitched to the tire chain main body (the net fabric at 5 meshes) at the outside of the tire.

In order to manufacture the XO type inside surface portion as illustrated in Fig. 11(a), the following steps were performed. That is, a rectangle shaped woven fabric having a width of 12 cm and a length of 220 cm (a plain weave fabric using a polyester 560 dtex yarn (woven density: 50 yarns/2.54 cm in warp and weft) was used as an inner cloth to be used inside of the tire and was folded in half in the width direction to form a bag-like shape with one longer side open. Then, a rubber band having a 2 cm width and a 103 cm length under a natural condition (the above rubber band has a stress of 14 N when it is stretched by 100% of the initial length of 50 mm) was prepared, and one end of the rubber bund and the other end of the rubber band were superimposed by 3 cm and were stitched to each other to form an annular shaped rubber band (first string member 76) having a circumference of 100 cm. The annular shaped rubber band (first string member 76) was provided with two signs of points X which were apart from each other by 40 cm, as well as two another signs of points X which were apart from each other by 40 cm were provided at positions opposing to the former two points X (at positions opposing to the former two points X when the rubber band was formed into a circular shape (at an angle of 180˚)) (see, Fig. 16(c)). Then, the annular rubber band was inserted into a bag of the inner cloth. On the other hand, four pieces of thin width fabric of a size of 2 cm width x 80 cm length were prepared (second string members 74a, 75a, 74b, 75b), and one ends of them were stitched to the points X, respectively. Then, two pieces of the 80 cm thin width fabrics were paired to have them cross to each other (a crossing between the second string members 74a and 75a, a crossing between the second string members 74b and 75b), and the thin width fabrics are pulled toward the outer circumferential edge 73b of the inside surface portion while keeping them so as not to be loosen, and thereby the other ends stitched to the side edge portion of the tire chain main body (points Y), respectively. Then, a longer side at a side of the opening of the inner cloth having been made into the bag shape was stitched to the entire circumference of the side edge portion of the tire chain main body. Thus obtained inside surface portion has a doughnut shape having an outer diameter of 58 cm and a width of 5 cm, and thus came to have an XO type (180˚ type) rubber band + thin width fabric (Fig. 16(c)).

The tire chain made of a knit fabric was obtained according to the above method. Here, the tire chain made of a knit fabric of Experimental example 3 included a portion covering the contact patch of a tire of which 94.4% (area ratio) was made of a knit fabric.

Thereafter, two tires of the front wheels (driving wheels) were covered with the tire chain made of a knit fabric of Experimental example 3. 185/70-14 inch summer tires were used for both of the (two) front wheels and the (two) rear wheels.

A driving test was performed on a dry road and a compacted snow road, respectively, with the tires covered with the tire chains made of a knit fabric. The result is shown in Table 1. Further, there was a good operability in installing the tire chain made of a knit fabric of Experimental example 3 to the tires. Still further, there was a good operability in removing the tire chain made of a knit fabric from the tires after the driving test.

<Experimental example 4>

Using a 1,100 dtex/190f polyester multifilament having a strength of 9.3 cN/dtex (type H02 manufactured by TOYOBO Co. Ltd.) and of which single yarn has filaments of a circular cross section, and a 1760 dtex/1560f-SK60 high strength polyethylene multifilament having a strength of 29.0 cN/dtex (DYNEEMA (registered mark) manufactured by TOYOBO CO., LTD.), a twist yarn was made according to the following method. That is, the twist yarn was obtained such that a paralleled yarn composed of four pieces of the above polyester multifilament paralleled with further six pieces of this four paralleled yarn, and a paralleled yarn composed of three pieces of having a ratio of polyester:DYNEEMA = 2.1 were paralleled with further two pieces of this three paralleled yarn, and those were first-twisted for Z (Z twist) 120 times/m (34320 dtex). Two pieces of the first twist yarn of the 34320 dtex were final-twisted by the knotless net knitting machine for S (S twist) 100 times/m, 36 shed, and thereby a cylindrical shaped knotless honeycomb meshed net fabric having a length of a side of a mesh of 30 mm at the net leg portions and 15 mm at the burl portions was obtained. The strand fineness was 68,640 dtex. At the time, the mixing ratio of the DYNEEMA was 10.3 mass%.

The net fabric was cut at four meshes in the knitting direction (in the direction of the arrow M in Fig. 7) (a length of the net fabric became 24 cm) (tire chain main body). A circular side cloth (outer cloth 12) having a diameter of 58 cm was stitched to the tire chain main body (four meshes of the net fabric) at the outside of the tire.

In order to manufacture the U type inside surface portion as it is illustrated in Fig. 12(a), the following steps were performed. That is, a woven fabric cut into a rectangle shape of a 12 cm width and a 220 cm length (a plain weave fabric using a polyester 560 dtex yarn (woven density: 50 yarns/2.54 cm in warp and weft) was used as an inner cloth to be used for the inside of the tire, and the fabric is folded in half in a width direction to form it into a bag shape with one longer side open. A rubber band having a 2 cm width and a 34 cm length under a natural condition (the rubber band has a stress of 14 N when it is stretched by 100% of the initial length of 50 mm) was prepared, and thin width fabrics of a 2 cm width x a 40 cm length were stitched to both ends of the rubber band. The other ends of the thin width fabrics which were not stitched to the rubber band were respectively stitched to the side edge portion of the tire chain main body at a 20 cm distance (points Y). Further, the same ones were arranged at opposing positions (positions of reverse U-shape). Then, a longer side at a side of the opening of the inner cloth having been made into the bag shape was stitched to the entire circumference of the side edge portion of the tire chain main body. Thus obtained inside surface portion had a doughnut shape having an outer diameter of 58 cm and a width of 5 cm, and thus came to have an U type (180° type) rubber band + thin width fabric.

As described above, the tire chain made of a knit fabric was obtained. The tire chain made of a knit fabric of Experimental example 4 included a portion covering the contact patch of a tire of which 94.4% (area ratio) was made of a knit fabric.

Then, the two front wheels (driving wheels) were covered with the tire chain made of a knit fabric of Experimental example 4. Here, 185/70-14 inch-sized summer tires were used for the (two) front wheels and the (two) rear wheels.

A driving test was performed on a dry road and a compacted snow road, respectively, with the tires covered with the tire chains made of a knit fabric. The result is shown in Table 1. Further, there was a good operability in installing the tire chain made of a knit fabric of Experimental example 4 to the tires. Still further, there was a good operability in removing the tire chain made of a knit fabric from the tires after the driving test.

<Experimental example 5>

Using a 1,670 dtex/285f polyester multifilament having a strength of 9.3 cN/dtex (type H02 manufactured by TOYOBO Co. Ltd.) and of which single yarn has filaments of a circular cross section, 5010 dtex three pieces of the above polyester multifilament were paralleled, and further six pieces of this three paralleled yarn were first-twisted for Z (Z twist) 120 times/m. The two pieces of this first twist yarn of 30,060 dtex were final-twisted by the knotless net knitting machine for S (S twist) 100 times/m, 52 shed, and thereby a knotless diamond meshed cylindrical net fabric having a length of a side of a mesh of 25.6 mm was obtained. The strand fineness was 60,120 dtex.

The cylindrical net fabric was cut for seven meshes in the knitting direction (the direction of the arrow M of Fig. 3) (Fig. 3, tire chain main body (knit fabric portion 11)), and a circular side cloth (outer cloth 12) having a diameter of 58 cm was stitched at the outside of the tire.

A fabric cut into a rectangle shape of a 6 cm width and a 220 cm length (a plain weave fabric using a polyester 560 dtex yarn (woven density: 50 yarns/2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (a condition where the rubber band is not stretched) was stitched along the other longer side (inner circumferential end portion 13a) of the inner cloth while the rubber band was stretched (Fig. 14: a partial view illustrating that the tire chain made of a knit fabric main body, the tire outer cloth, the inner cloth, and the rubber band were stitched to assemble the tire chain (in the illustrative example, the net fabric was cut at seven meshes in the tire width direction)). The above rubber band has a stress of 14 N when it is stretched by 100% of the initial length of 50 mm. Further, with the above configuration, the inner cloth (inner cloth 13) came to have a doughnut shape having an outer diameter of 58 cm and a width of 5 cm.

As described above, the tire chain made of a knit fabric was obtained. The tire chain made of a knit fabric of Experimental example 5 included a portion covering a contact patch of a tire which was knit fabric in its entirety.

Then, the two front wheels (driving wheels) were covered with the tire chain made of a knit fabric of Experimental example 5. Here, 185/65-14 inch-sized summer tires were used for the (two) front wheels and the (two) rear wheels.

A driving test was performed on a dry road and a compacted snow road, respectively, with the tires covered with the tire chains made of a knit fabric. The result is shown in Table 1. Further, there was a good operability in installing the tire chain made of a knit fabric of Experimental example 5 to the tires. Still further, there was a good operability in removing the tire chain made of a knit fabric from the tires after the driving test.

<Experimental example 6>

Using a 1,100 dtex/24f polyester multifilament having a strength of 6.1 cN/dtex (type 534 manufactured by TOYOBO Co. Ltd.) and of which single yarn has filaments of a circular cross section and a 1320 dtex/1170f-SK60 high strength polyethylene multifilament having a strength of 29.0 cN/dtex (DYNEEMA (registered mark) manufactured by TOYOBO Co., Ltd.), three pieces of the above multifilament were paralleled so as to have a ratio of polyester: DYNEEMA = 2:1, with further six pieces of this 3,520 dtex paralleled yarn were first-twisted for Z (Z twist) 120 times/m. The two pieces of this 21,120 dtex first twist yarn were final-twisted by the knotless net knitting machine for S (S twist) 100 times/m, 52 shed, and thereby a knotless diamond meshed cylindrical net fabric having a length of a side of a mesh of 25.6 mm was obtained. The strand fineness was 42,240 dtex. A mixing ratio of the DYNEEMA was 37.5 mass% at the time.
The cylindrical net fabric was cut for seven meshes in the knitting direction (Fig. 3, tire chain main body (knit fabric portion 11)), and a circular side cloth (outer cloth 12) having a diameter of 58 cm was stitched at the outside of the tire. Further, a woven fabric cut into a rectangular shape of a 6 cm width and a 220 cm length (a plain weave fabric using a polyester 560 dtex yarn (woven density: 50 yarns/2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was stitched along the other longer side (inner circumferential end portion 13a) of the inner cloth while the rubber band was stretched (Fig. 14: a partial view illustrating that the tire chain made of a knit fabric main body, the tire outer cloth, the inner cloth, and the rubber band were stitched to assemble the tire chain (in the illustrative example, the net fabric was cut at seven meshes in the tire width direction)). With the above configuration, the inner cloth (inner cloth 13) came to have a doughnut shape having an outer diameter of 58 cm and a width of 5 cm.
As described above, the tire chain made of a knit fabric was obtained. The tire chain made of a knit fabric of Experimental example 6 included a portion covering a contact patch of a tire which was knit fabric in its entirety.
Then, the two front wheels (driving wheels) were covered with the tire chain made of a knit fabric of Experimental example 6. Here, 185/65-14 inch-sized summer tires were used for the (two) front wheels and the (two) rear wheels.
A driving test was performed on a dry road and a compacted snow road, respectively, with the tires covered with the tire chains made of a knit fabric. The result is shown in Table 1. Further, there was a good operability in installing the tire chain made of a knit fabric of Experimental example 6 to the tires. Still further, there was a good operability in removing the tire chain made of a knit fabric from the tires after the driving test.

<Experimental example 7>

Using a 1,100 dtex/24f polyester multifilament having a strength of 6.1 cN/dtex (type 534 manufactured by TOYOBO Co. Ltd.) and of which single yarn has filaments of a circular cross section, 6600 dtex six pieces of the above polyester multifilament were paralleled, and further six pieces of this six paralleled yarn were first-twisted for Z (Z twist) 100 times/m. The two pieces of this 39,600 dtex first twist yarn were final-twisted by the knotless net knitting machine for S (S twist) 100 times/m, and thereby a knotless diamond meshed net fabric having a length of a side of a mesh of 61.2 mm was obtained. The strand fineness was 79,200 dtex.
The net fabric was cut for four meshes in the knitting direction, and both ends of the net fabric were stitched to each other to form a cylindrical shape having a length of the circumference of 180 cm. At the time, a 10 cm x 44 cm sized plain weave fabric (a filler cloth 22) using a polyester 1100 dtex yarn (woven density: 28 yarns/2.54 cm in warp and weft) was used for the sewing portion, and the plain weave fabrics were patched to both surfaces at the abutting portion of the net fabric, respectively, and the portion was stitched (Fig. 7, tire chain main body 25). Further, a circular side cloth (outer cloth 12) having a diameter of 58 cm stitched to the tire chain main body (net fabric stitched so as to form a cylindrical shape) at the outside of the tire. Still further, a woven fabric cut into a rectangle shape of a 6 cm width and a 220 cm length (a plain weave fabric using a polyester 560 dtex yarn (woven density: 50 yarns/2.54 cm in warp and weft) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was stitched along the other longer side (inner circumferential end portion 13a) of the inner cloth while the rubber band was stretched. Accordingly, the inner cloth (inner cloth 13) came to have a doughnut shape having an outer diameter of 58 cm and a width of 5 cm.
As described above, the tire chain made of a knit fabric was obtained. The tire chain made of a knit fabric of Experimental example 7 included a portion covering a contact patch of a tire of which 94.4% (area ratio) was knit fabric.

Then, the two front wheels (driving wheels) were covered with the tire chain made of a knit fabric of Experimental example 7. Here, 185/65-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 7 to the tires. Still further, there was a good operability in removing the tire chain made of a knit fabric from the tires after the driving test.

<Experimental example 8>

Using a 1,670 dtex/285f polyester multifilament having a strength of 9.3 cN/dtex (type H02 manufactured by TOYOBO Co. Ltd.) and of which single yarn has filaments of a circular cross section, 5010 dtex three pieces of the above polyester multifilament were paralleled, with further six pieces of the three paralleled yarn were first-twisted for Z (Z twist) 20 times/m. Two pieces of this 30,060 dtex first twist yarn were final-twisted by the knotless net knitting machine for S (S twist) 10 times/m, 52 shed, and a cylindrical knotless diamond meshed net fabric having a length of a side of a mesh of 25.6 mm was obtained. The strand fineness was 60,120 dtex.

The cylindrical shaped net fabric was cut for seven meshes in the knitting direction (the direction of the arrow M in Fig. 3) (Fig. 3, tire chain main body (knit fabric portion 11)), and a circular side cloth (outer cloth 12) having a diameter of 58 cm was stitched at the outside of the tire. Further, a fabric cut into a rectangle shape of a 6 cm width and a 220 cm length (a plain weave fabric using a polyester 560 dtex yarn (woven density: 50 yarns/2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was used, and the rubber band was stitched along the other longer side (inner circumferential end portion 13a) of the inner cloth while the rubber band was stretched (Fig. 14). Accordingly, the inner cloth (inner cloth 13) came to have a doughnut shape having an outer diameter of 58 cm and a width of 5 cm.

As described above, the tire chain made of a knit fabric was obtained. The tire chain made of a knit fabric of Experimental example 8 included a portion covering a contact patch of a tire which was knit fabric in its entirety.

Then, the two front wheels (driving wheels) were covered with the tire chain made of a knit fabric of Experimental example 8. Here, 185/65-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 8 to the tires. Still further, there was a good operability in removing the tire chain made of a knit fabric from the tires after the driving test.

< Experimental example 9>

Using a 1,100 dtex/288f polyester multifilament having a strength of 6.1 cN/dtex and of which single yarn has filaments of a circular cross section, 6600 dtex six pieces of the above polyester multifilament were paralleled with further six pieces of the six paralleled yarn were first-twisted for Z (Z twist) 100 times/m. Two pieces of the 39,600 dtex first twist yarn were final-twisted by the knotless net knitting machine for S (S twist) 100 times/m, 52 shed, and a knotless diamond meshed net fabric having a length of a side of a mesh of 25.6 mm was obtained. The strand fineness was 79,200 dtex.

The cylindrical net fabric was cut for seven meshes in the knitting direction (Fig. 3, tire chain main body (knit fabric portion 11)), and a circular side cloth (outer cloth 12) having a diameter of 58 cm was stretched at the outside of the tire. Further, a woven fabric cut into a rectangle shape of a 6 cm width and a 220 cm length (a plain weave fabric using a polyester 560 dtex yarn (woven density: 50 yarns/2.54 cm in warp and weft) was used as an inner cloth to be used inside of the tire, and one longer side of the inner cloth stitched to the tire chain main body at the inside of the tire. Then, a rubber band having a 2 cm width and a 90 cm length under a natural condition (the above rubber band has a stress of 14 N when it is stretched by 100% of the initial length of 50 mm) was used and the rubber band was stitched along the other longer side (inner circumferential end portion 13a) of the inner cloth while the rubber band was stretched (Fig. 14). Accordingly, the inner cloth (inner cloth 13) came to have a doughnut shape having an outer diameter of 58 cm and a width of 5 cm.

As described above, the tire chain made of a knit fabric was obtained. The tire chain made of a knit fabric of Experimental example 9 included a portion covering a contact patch of a tire which was knit fabric in its entirety.

Then, the two front wheels (driving wheels) were covered with the tire chain made of a knit fabric of Experimental example 9. Here, 185/G5-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 9 to the tires. Still further, there was a good operability in removing the tire chain made of a knit fabric from the tires after the driving test.

< Experimental example 10>

Using a 1,100 dtex/24f polyester multifilament having a strength of 6.1 cN/dtex (type 534 manufactured by TOYOBO Co. Ltd.) and of which single yarn has filaments of a circular cross section, 6600 dtex six pieces of the above multifilament were paralleled, with further six pieces of the six paralleled yarn were first-twisted for Z (Z twist) 100 times/m. Two pieces of the 39,600 dtex first twist yarn were final-twisted by the knotless net knitting machine for S (S twist) 100 times/m, and a knotless diamond meshed net fabric having a length of a side of a mesh of 10.0 mm was obtained. The strand fineness was 79,200 dtex.

The net fabric was cut for twenty-eight meshes in the knitting direction, and both ends of the net fabric were sewn to each other to form a cylindrical shape having a length of a circumference of 180 cm. At the time, a 10 cm x 44 cm sized plain weave fabric using a polyester 1100 dtex yarn (a filler cloth 22) (woven density: 28 yarns/2.54 cm in warp and weft) was used for patching an face side and a back side of an abutting portion of the net fabric, thereby sewing the portion (Fig. 7, tire chain main body 25). Further, a circular shaped side cloth (outer cloth 12) having a diameter of 58 cm was stitched to the tire chain main body (net fabric stitched to form a cylindrical shape) at the outside of the tire. Further, a woven fabric cut into a rectangle shape of a 6 cm width and a 220 cm length (a plain weave fabric using a polyester 560 dtex yarn (woven density: 50 yarns/2.54 cm in warp and weft) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was used and the rubber band is stitched along the other longer side (inner circumferential end portion 13a) of the inner cloth while the rubber band was stretched (Fig. 14: a partial view illustrating that the tire chain made of a knit fabric main body, the tire outer cloth, the inner cloth, and the rubber band are stitched to assemble the tire chain (in this illustrative example, the fabric is cut for seven meshes in a tire width direction). Accordingly, the inner cloth (inner cloth 13) came to have a doughnut shape having an outer diameter of 58 cm and a width of 5 cm.

As described above, the tire chain made of a knit fabric was obtained. The tire chain made of a knit fabric of Experimental example 10 included a portion covering a contact patch of a tire of which 94.4% (area ratio) was knit fabric.

Then, the two front wheels (driving wheels) were covered with the tire chain made of a knit fabric of Experimental example 10. Here, 185/65-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 10 to the tires. Still further, there was a good operability in removing the tire chain made of a knit fabric from the tires after the driving test.

< Experimental example 11>

Using a 1,100 dtex/96f polyester multifilament having a strength of 6.8 cN/dtex (type 654 manufactured by TOYOBO Co. Ltd.) and of which single yarn has filaments of a circular cross section, 3300 dtex three pieces of the above multifilament were paralleled, with further six pieces of the three paralleled yarn were first-twisted for Z (Z twist) 120 times/m. Two pieces of the 19,800 dtex first twist yarn were final-twisted by the knotless net knitting machine for S (S twist) 100 times/m, 26 shed, and a knotless diamond meshed net fabric having a length of a side of a mesh of 51.2 mm was obtained. The strand fineness was 39,600 dtex.

The cylindrical net fabric was cut for four meshes in the knitting direction (Fig. 3, tire chain main body), and a circular shaped side cloth (outer cloth 12) having a diameter of 58 cm was stitched at the outside of the tire. Further, a woven fabric cut into a rectangle shape of a 6 cm width and a 220 cm length (a plain weave fabric using a polyester 560 dtex yarn (woven density: 50 yarns/2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was used and the rubber band was stitched along the other longer side (inner circumferential end portion 13a) of the inner cloth while the rubber band was stretched (Fig. 14). Accordingly, the inner cloth (inner cloth 13) came to have a doughnut shape having an outer diameter of 58 cm and a width of 5 cm.

As described above, the tire chain made of a knit fabric was obtained. The tire chain made of a knit fabric of Experimental example 11 includes a portion covering a contact patch of a tire which is knit fabric in its entirety.

Then, the two front wheels (driving wheels) were covered with the tire chain made of a knit fabric of Experimental example 11. Here, 185/65-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 11 to the tires. Still further, there was a good operability in removing the tire chain made of a knit fabric from the tires after the driving test.

< Experimental example 12>

Using a 1,100 dtex/24f polyester multifilament having a strength of 6.1 cN/dtex (type 534 manufactured by TOYOBO Co. Ltd.) and of which single yarn has filaments of a circular cross section, 6600 dtex six pieces of the above multifilament were paralleled with further six pieces of the six paralleled yarn were twisted for Z (Z twist) 100 times/m. The 39,600 dtex twist yarn was used to be knitted by a double sheet bend net knitting machine, and a double sheet bend net fabric having a length of a side of a mesh of 25.6 mm was obtained. The strand fineness was 39,600 dtex.

The net fabric was cut for seven meshes in the knitting direction, and was stitched to form a cylindrical shape having a length of a circumference of 180 cm. At the time, a 10 cm x 44 cm sized plain weave fabric using a polyester 1100 dtex yarn (a filler cloth 22) (woven density: 28 yarns/2.54 cm in warp and weft) was used for patching an face side and a back side of an abutting portion of the net fabric and stitched, respectively (Fig. 7, tire chain main body 25). Further, a circular shaped side cloth (outer cloth 12) having a diameter of 58 cm was stitched to the tire chain main body (net fabric stitched to form a cylindrical shape) at the outside of the tire. Further, a woven fabric cut into a rectangle shape of a 6 cm width and a 220 cm length (a plain weave fabric using a polyester 560 dtex yarn (woven density: 50 yarns/ 2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was used and the rubber band was stitched along the other longer side (inner circumferential end portion 13a) of the inner cloth while the rubber band was stretched (Fig. 14: a partial view illustrating that the tire chain made of a knit fabric main body, the tire outer cloth, the inner cloth, and the rubber band are stitched to assemble the tire chain (in this illustrative example, the fabric is cut for seven meshes in a tire width direction)). Accordingly, the inner cloth (inner cloth 13) came to have a doughnut shape having an outer diameter of 58 cm and a width of 5 cm.

As described above, the tire chain made of a knit fabric was obtained. The tire chain made of a knit fabric of Experimental example 12 included a portion covering a contact patch of a tire of which 94.4% (area ratio) was knit fabric.

Then, the two front wheels (driving wheels) were covered with the tire chain made of a knit fabric of Experimental example 12. Here, 185/65-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 12 to the tires. Still further, there was a good operability in removing the tire chain made of a knit fabric from the tires after the driving test.

< Experimental example 13>

Using a 1,100 dtex/192f polyester multifilament having a strength of 7.5 cN/dtex (type 634 manufactured by TOYOBO Co. Ltd.) of which single yarn has filaments of a circular cross section, a plain weave fabric was woven to have the woven density of 28 yarns/2.54 cm in warp and weft. The plain weave fabric was cut into a 20 cm width and 190 cm length, and thereafter stitched into a cylindrical shape having a length of a circumference of 180 cm.

A circular side cloth (outer cloth) having a diameter of 58 cm was stitched to a portion of the cylindrical fabric corresponding to the outside of the tire. Further, a woven fabric cut into a rectangle shape of a 6 cm width and a 220 cm length (a plain weave fabric using a polyester 560 dtex yarn (woven density: 50 yarns/2.54 cm in warp and weft)) was used as an inner cloth to be used inside of the tire, and one longer side of the inner cloth was stitched to the tire chain main body at the inside of the tire. Then, a rubber band having a 2 cm width and a 90 cm length under a natural condition (the above rubber band has a stress of 14 N when it is stretched by 100% of the initial length of 50 mm) was used and the rubber band was stitched along the other longer side of the inner cloth while the rubber band was stretched. Accordingly, the inner cloth came to have a doughnut shape having an outer diameter of 58 cm and a width of 5 cm.

As described above, the tire chain made of woven fabric was obtained. The tire chain made of woven fabric of Experimental example 13 included a portion covering a contact patch of a tire which was woven fabric in its entirety.

Then, the two front wheels (driving wheels) were covered with the tire chain made of woven fabric of Experimental example 13. Here, 185/70-14 inch-sized summer tires were used for both of the (two) front wheels and the (two) rear wheels.

A driving test was performed on a dry road and a compacted snow road, respectively, with the tires covered with the tire chain made of woven fabric. The result is shown in Table 2. Further, there was a good operability in installing the tire chain made of woven fabric of Experimental example 13 to the tires. Still further, there was a good operability in removing the tire chain made of woven fabric from the tires after the driving test.

< Experimental example 14>

Using a 1,670 dtex/285f polyester multifilament having a strength of 9.3 cN/dtex (type H02 manufactured by TOYOBO Co. Ltd.) of which single yarn has filaments of a circular cross section, 5010 dtex three pieces of the above multifilament were paralleled, with further six pieces of the three paralleled yarn were first-twisted for Z (Z twist) 120 times/m. Two 30,060 dtex first twist yarn were used to be final-twisted by the knotless net knitting machine for S (S twist) 100 times/m, 52 shed, and a knotless diamond meshed cylindrical net fabric having a length of a side of a mesh of 25.6 mm was obtained. The strand fineness was 60,120 dtex.

The cylindrical net fabric was cut for seven meshes in the knitting direction (the direction of the arrow M in Fig. 3) (Fig. 3, tire chain main body (knit fabric portion 11)), a circular shaped side cloth (outer cloth 12) having a diameter of 58 cm was stitched at the outside of the tire.

In order to manufacture the XO type inside surface portion as illustrated in Fig. 11(b), the following steps were performed. That is, a woven fabric cut into a rectangle shape having a 12 cm width and a 220 cm length (a plain weave fabric using a polyester 560 dtex yarn (woven density: 50 yarns/2.54 cm in warp and weft)) was used as an inner cloth to be used inside of the tire, and the woven fabric was folded into half in its width direction to form it into a bag shape with one longer side open. A rubber band having a 2 cm width and a 103 cm length under a natural condition (the above rubber band has a stress of 14 N when it is stretched by 100% of the initial length of 50 mm) was prepared, and one end of the rubber band and the other end of the rubber band were superimposed by 3 cm and were stitched to form it into an annular shaped rubber band (first string member 76) having a circumference of 100 cm. The annular shaped rubber band (first string member 76) was provided with two signs of points X which were apart from each other by 40 cm as well as two another signs of points X were provided so as to be apart from each other by 40 cm at positions at an angle of 120˚ with respect to the former two points X (at a position an angle from the center when the rubber band was formed into a circle became 120˚). Then, the annular rubber band (first string member 76) was inserted into a bag of the inner cloth. On the other hand, four pieces of thin width fabric of a width 2 cm x a length 80 cm were prepared (second string members 74c, 75c, 74d, 75d), and one ends of the thin width fabric were stitched to the points X, respectively. Then, two pieces of the 80 cm thin width fabric were paired (corresponding to the pair of points X) to have the thin width fabric cross to each other (crossing of second string members 74c and 75c, crossing of second string members 74d and 75d), and the thin width fabric were pulled toward the outer circumferential edge 73b of the inside surface portion while keeping them so as not to be loosen, and the other ends were stitched to the side edge portion of the tire chain main body (points Y), respectively. Then, a longer side at a side of the opening of the inner cloth having been made into the bag shape was stitched to the entire circumference of the side edge portion of the tire chain main body. Thus obtained inside surface portion had a doughnut shape having an outer diameter of 58 cm and a width of 5 cm, and thus came to have an XO type (120˚-type) rubber band + thing width fabric.

As described above, the tire chain made of a knit fabric was obtained. The tire chain made of a knit fabric of Experimental example 14 included a portion covering a contact patch of a tire which was knit fabric in its entirety.

Then, the two front wheels (driving wheels) were covered with the tire chain made of a knit fabric of Experimental example 14. Here, 185/65-14 inch-sized summer tires were used for both of the (two) front wheels and the (two) rear wheels.

A driving test was performed on a dry road and a compacted snow road, respectively, with the tires covered with the tire chains made of a knit fabric. The result is shown in Table 2. Further, there was a good operability in installing the tire chain made of a knit fabric of Experimental example 14 to the tires. Still further, there was a good operability in removing the tire chain made of a knit fabric from the tires after the driving test.

[Table 1]

| | Unit | Experimental example 1 | Experimental example 2 | Experimental example 3 | Experimental example 4 | Experimental example 5 | Experimental example 6 |
|---|---|---|---|---|---|---|---|
| Material | | Polyester | | Polyester (PET) + Dyneema (Dy) | | Polyester | Polyester (PET) + Dyneema (dy) |
| Single fiber fineness | dtex | 45.8 | | 5.8 + 1.1 | | 5.8 | 45.8 + 1.1 |
| Cross section of a single yarn | | Circular shape | | Circular shape | | Circular shape | Circular shape |
| First twist | | | | | | | |
|     Structure | dtex/pieces/ pieces | 1100/6/6 | | Single twist yarn A [(PET1100/4/6) + (PET1100/2 + Dy1760)12] Single twist yarn B [(PET1100/4/7 + (PET1100/2 + Dy1760)) | [(PET1100/4/6) +(PET)1100/2 + Dy1760)/2] | 1670/3/6 | [(PET1100/2) + (Dy1320)]/6 |
|     Twist number | times/m | 100 | | 120 | 120 | 120 | 120 |
|     Twist coefficient (k) | | 199 | | Single twist yarn A : 222 Single twist yarn B : 224 | 222 | 208 | 174 |
| Final twist | | | | | | | |
|     Structure | dtex/pieces/ pieces | 39600/2 | | 34320 + 34760 | 34320/2 | 30060/2 | 21120/2 |
|     Twist number | times/m | 100 | | 100 | 100 | 100 | 100 |
|     Twist coefficient (k) | | 281 | | 263 | 262 | 245 | 206 |
| Strand fineness | dtex | 79200 | | 69080 | 68640 | 60120 | 42240 |
| Final twist | | | | | | | |

| Knotting form of net Shape of meshes | | Knotless net Diamond mesh | | Knotless net Honeycomb mesh | | Knotless net Diamond mesh | |
|---|---|---|---|---|---|---|---|
| Length of a side of a mesh | mm | 25.6 | | Net leg portion 21.0 mm, Burl portion 18.0 mm | Net leg portion 30.0mm, Burl portion 15.0 mm | 25.6 | 25.6 |
| Space area (S) of a mesh | mm$^2$ | 462 | | 686 | 1120 | 497 | 515 |
| Strand width (W) | mm | 4.0 | | Net leg portion 4.0 mm, Burl portion 6.0 mm | Net leg portion 4.0 mm, Burl portion 6.0 mm | 3.3 | 2.9 |
| S 1/2/W | | 5.4 | | 5.6 | 7.1 | 6.8 | 7.8 |
| Thickness ($T_A$) at a strand burl portion | mm | 4.6 | | 5.3 | 5.2 | 3.9 | 3.3 |
| Thickness ($T_B$) at a strand net leg portion | mm | 3.9 | | 3.5 | 3.5 | 3.2 | 2.9 |
| $T_A/M_B$ | | 1.2 | | 1.5 | 1.5 | 1.2 | 1.1 |
| Braking performance (stopping distance) | m | 13.8 | | 13.0 | 14.7 | 13.9 | 14.0 |
| Hill-climbing performance (required time) | second | 8.5 | | 8.2 | 8.9 | 8.6 | 8.6 |
| Durability (driving distance) | km | 95 | | 81 | 70 | 68 | 75 |
| Come-off prevention performance (first test) | | ○ | ○ | ○ | ○ | ○ | ○ |
| Come-off prevention performance (second test) | | Δ | ○ | ○ | ○ | Δ | Δ |

EP 2 006 127 B1

[Table 2]

| | Unit | Experimental example 7 | Experimental example 8 | Experimental example 9 | Experimental example 10 | Experimental example 11 | Experimental example 12 | Experimental example 13 | Experimental example 14 |
|---|---|---|---|---|---|---|---|---|---|
| Material | | Polyester | Polyester | Polyester | Polyester | Polyester | Polyester | Polyester | Polyester |
| Single fiber fineness | dtex | 45.8 | 5.8 | 3.8 | 45.8 | 11.5 | 45.8 | 5.7 | 5.8 |
| Cross section of a single yarn | | Circular shape | Circular shape | Circular shape | Circular shape | Circular shape | Circular shape | Circular shape | Circular shape |
| First twist | | | | | | | | | |
| Structure | dtex/ pieces/ pieces times/m | 1100/6/6 | 1670/3/6 | 1100/6/6 | 1100/6/6 | 1100/3/6 | 1100/6/6 | - | 1670/3/6 |
| Twist number | | 100 | 20 | 100 | 100 | 120 | 100 | - | 120 |
| Twist coefficient (k) | | 199 | 35 | 199 | 199 | 169 | 199 | - | 208 |
| Final twist | | | | | | | | | |
| Structure | dtex/ pieces/ pieces times/m | 39600/2 | 30060/2 | 39600/2 | 39600/2 | 10800/2 | - | - | 30060/2 |
| Twist number | | 100 | 10 | 100 | 100 | 100 | - | - | 100 |
| Twist coefficient (k) | | 281 | 25 | 281 | 281 | 199 | - | - | 245 |
| Strand fineness | dtex | 79200 | 60120 | 79200 | 79200 | 39600 | 39600 | 1100 | 60120 |
| Knotting form of net / Shape of meshes | | Knotless net / Diamond mesh | | | | | Double sheet bend net | Woven fabric (plain weave) 28/2.54 cm | Knotless net Diamond mesh |

EP 2 006 127 B1

29

(continued)

| | | | | | | | | [Note 1] | |
|---|---|---|---|---|---|---|---|---|---|
| Final twist Length of a side of a mesh | mm | 61.2 | 25.6 | 25.6 | 10.0 | 51.2 | 25.6 | | 25.6 |
| Space area (S) of a mesh | mm$^2$ | 3272 | 515 | 462 | 36 | 2431 | 520 | | 497 |
| Strand width (W) | mm | 4.0 | 3.4 | 4.0 | 4.0 | 2.9 | 2.7 | | 3.3 |
| $S^{1/2}$/W | | 14.3 | 6.7 | 5.4 | 1.5 | 17.0 | 8.4 | | 6.8 |
| Thickness ($T_A$) at a strand burl portion | mm | 4.6 | 3.9 | 4.6 | 4.6 | 3.2 | 8.9 | - | 3.9 |
| Thickness ($T_B$ at a strand net leg portion | mm | 3.9 | 3.1 | 3.9 | 3.9 | 2.6 | 2.7 | - | 3.2 |
| $T_A/T_B$ | | 1.2 | 1.3 | 1.2 | 1.2 | 1.2 | 3.3 | - | 1.2 |
| Braking performance (stopping distance) | m | 15.5 | 14.1 | 13.9 | 16.6 | 16.9 | 13.9 | 17.2 | 13.9 |
| Hiil-climbing performance (required time) | second | 10.6 | 8.7 | 8.5 | 11.8 | 12.1 | 8.7 | 12.5 | 8.G |
| Durability (driving distance) | km | 90 | 59 | 40 | 101 | 21 | 5 | 60 | 68 |
| Come-off prevention performance (first test) | | ○ | ○ | ○ | ○ | ○ | ○ | ○ | ○ |
| Come-off prevention performance (second test) | | Δ | Δ | A | Δ | Δ | Δ | Δ | ○ |
| [Note 1]: cannot measure due to a too small space | | | | | | | | | |

Incidentally, in all of Experimental examples 1 to 12, and 14, since the knit fabric was knitted so as to form the same shaped meshes, when calculating the $S^{1/2}/W$, a arbitrary three meshes on the contact patch of a tire were selected to calculate an average, and the average value was considered as the value of $S^{1/2}/W$. With regard to Experimental example 13, since a space encompassed within the yarn was too small, the value of $S^{1/2}/W$ could not be measured.

As it is seen from Tables 1 and 2, the tire chains made of a knit fabric of Experimental examples 1 to 3 show the sufficient braking performance and the hill-climbing performance in driving on the winter road, and are excellent in the durability. In the tire chain made of a knit fabric of Experimental example 4 to 6, the sufficient braking performance and the hill-climbing performance are demonstrated as they are shown in Experimental examples 1 to 3. Further, Experimental examples 2 to 4 and 14 show an excellent come-off prevention performance in comparison with that according to the other Experimental examples. The tire chain made of a knit fabric of Experimental example 7 is slightly deteriorated in the braking performance and the hill-climbing performance in comparison with Experimental examples 1 to 6 since a size of a mesh is slightly larger than those of the other Experimental examples; however, there is no remarkable problem in an actual driving. The tire chain made of a knit fabric of Experimental example 8 shows the braking performance and the hill-climbing performance of an equal level as those of Experimental examples 1 to 6, but has slightly deteriorated in the durability which, however, would not a level of cause a problem. The tire chain made of a knit fabric of Experimental example 9 tends to slightly deteriorated in durability. The tire chain made of a knit fabric of Experimental example 10 is deteriorated in the braking performance and the hill-climbing performance. The tire chain made of a knit fabric of Experimental example 11 is deteriorated in the braking performance , the hill-climbing performance, and durability. The tire chain made of a knit fabric of Experimental example 12 is unsatisfactory in the durability. The tire chain made of woven fabric of Experimental example 13 is unsatisfactory in the braking performance and the hill-climbing performance.

INDUSTRIAL APPLICABILITY

The present invention relates to a tire chain made of a knit fabric to be used in tires of vehicles as a stopper when the vehicles are driving on a snow-covered road or a frozen road. The tire chain made of a knit fabric according to the present invention is applicable, of course, to tires for an automobile as well as to tires for the other various vehicles.

**Claims**

**1.**  A tire chain made of a knit fabric (10) to be removably installed to a tire (60) comprising:

wherein a cylindrical body for tightly covering at least a contact patch of the tire (60) has a knit fabric structure (11a) **characterized in that**
the relationship between the space area (S) of a mesh of the knit fabric structure (11a) and the width (W) of a strand of the knit fabric structure (11a), when the tire chain made of the knit fabric (10) is installed to the tire (60), satisfies the following formula (1); and
the thickness of a burl portion (15) of the knit fabric structure (11a) is three times or less as the thickness of a net leg portion (16) of the knit fabric structure (11a)

$$2 \leqq S^{1/2}/W \leqq 15 \qquad \ldots (1).$$

**2.**  The tire chain made of the knit fabric (10) according to claim 1, wherein the single fiber fineness of the main material yarn to be used in the knit fabric structure (11a) is 5 dtex or more and less than 90 dtex.

**3.**  The tire chain made of the knit fabric (10) according to claim 1 or 2, wherein the knit fabric structure (11a) is the knit fabric structure which has no knot at the burl portion (15).

**4.**  The tire chain made of the knit fabric (30) according to any one of claims 1 to 3, comprising

an inside surface portion (33) which corresponds to an inside side surface of the tire (60), which is continuous to the knit fabric structure (11) at an outer circumferential edge portion, and which includes an opening portion formed at a center thereof;

wherein the inside surface portion (33) includes:

a first string member (36, 37) for expanding/restoring an opening area for attaching/detaching the tire (60), the first string member (36/37) arranged along a circumferential edge of the opening portion; and

a second string member (35) for restricting a centrifugal force affecting the first string member (36/37) when the tire (60) is driven to rotate by connecting at least a point X of the first string member (36/37) with at least a point Y of the outer circumferential edge (33b) of the inside surface portion (33) or the vicinity thereof.

5. The tire chain made of the knit fabric (30) according to claim 4, wherein the second string member (35) is made of a nonelastic string (67).

6. The tire chain made of the knit fabric (30) according to claim 4 or claim 5, wherein a ring-like material (38) is provided on the point X with which one end of the first string member (36/37) is connected, and the first string member (36/37) and the second string member (35) are inserted into the ring-like material while the other end of the first string member (36/37) is connected to the second string member (35).

7. The tire chain made of the knit fabric according to any one of claims 4 to 6, wherein a portion of the first string member (37) is made of a nonelastic string, and a portion of the nonelastic string (37) is provided with the point X.

8. The tire chain made of the knit fabric according to claim 7, wherein there are a plurality of pairs of a portion of the nonelastic string (47a, 47b, 47c) of the first string member (46a, 47a, 46b, 47b, 46c, 47c) and the corresponding second string member (45a, 45b, 45c), and a portion of each nonelastic string includes the point X.

9. The tire chain made of the knit fabric according to claim 4 or 5, wherein the first string member (56, 57) is made of the elastic string (56) and the nonelastic string (57), two points X reside on the elastic string (56), and one second string member (54, 55) is connected to each of the two points X such that the second string members (54, 55) cross to each other.

10. The tire chain made of the knit fabric according to claim 4 or 5, wherein the entire first string member (76) is made of the elastic string, four points X reside on the first string member (76), one second string member (74a, 75a, 74b, 75b) is connected to each of the two paired adjacent points X such that the second string members (74a, 75a, 74b, 75b) cross to each other.

11. The tire chain made of the knit fabric (10) according to any one of claims 1 to 3, comprising:

an inside surface portion which corresponds to an inside side surface of the tire (60), which is continuous to the knit fabric structure (11a) at the outer circumferential edge portion thereof, and which includes an opening portion (68) at a center thereof;
wherein the inside surface portion includes more than two string members made only of the elastic string (88, 89), or made of the elastic string (84c, 85c) and the nonelastic string (84a, 84b, 85a, 85b) being connected to each other;
the string members (84, 85, 88, 89) have a U-shape, and are arranged so as to cross to each other at least at an angle of 90˚ to allow curved surface portions thereof to be positioned at a circumferential edge of the opening portion (68); and
both ends of each of the string members are connected to an outer circumferential edge of the inside surface portion or the vicinity thereof.

**Patentansprüche**

1. Schneekette aus einer Maschenware (10) zum abnehmbaren Montieren an einem Reifen (60), umfassend:

wobei ein zylindrischer Körper zum engen Bedecken wenigstens einer Aufstandsfläche des Reifens (60) eine Maschenwarenstruktur (11a) hat, **dadurch gekennzeichnet, dass**:
die Beziehung zwischen der Öffnungsfläche (S) einer Masche der Maschenwarenstruktur (11a) und der Breite (W) eines Stranges der Maschenwarenstruktur (11a), wenn die aus der Maschenware (10) bestehende Schneekette auf dem Reifen (60) montiert wird, der folgenden Formel (1) genügt; und
die Dicke eines Überkreuzungsteils (15) der Maschenwarenstruktur (11a) höchstens dreimal so groß ist wie die Dicke eines Nettoschenkelteils (16) der Maschenwarenstruktur (11a):

$$2 \leq S^{1/2}/W \leq 15 \qquad (1).$$

**2.** Schneekette aus der Maschenware (10) gemäß Anspruch 1, wobei die Einzelfaserfeinheit des Hauptmaterialgarns, das in der Maschenwarenstruktur (11a) verwendet werden soll, wenigstens 5 dtex und weniger als 90 dtex beträgt.

**3.** Schneekette aus der Maschenware (10) gemäß Anspruch 1 oder 2, wobei es sich bei der Maschenwarenstruktur (11a) um eine Maschenwarenstruktur, die am Überkreuzungsteil (15) keinen Knoten aufweist, handelt.

**4.** Schneekette aus der Maschenware (30) gemäß einem der Ansprüche 1 bis 3, umfassend:

einen Innenflächenteil (33), der einer inneren Seitenfläche des Reifens (60) entspricht und der an einem äußeren Umfangsrandteil in die Maschenwarenstruktur (11) übergeht und einen in seiner Mitte ausgebildeten Öffnungsteil beinhaltet;

wobei der Innenflächenteil (33) Folgendes umfasst:

ein erstes Schnurelement (36/37) zum Erweitern/Wiederherstellen eines Öffnungsbereichs zum Befestigen/Lösen des Reifens (60), wobei das erste Schnurelement (36/37) entlang eines Umfangsrands des Öffnungsteils angeordnet ist; und
ein zweites Schnurelement (35) zum Beschränken einer Zentrifugalkraft, die auf das erste Schnurelement (36, 37) wirkt, wenn der Reifen (60) zur Rotation angetrieben wird, durch Verbinden wenigstens eines Punkts X des ersten Schnurelements (36, 37) mit wenigstens einem Punkt Y des äußeren Umfangsrands (33b) des Innenflächenteils (33) oder in der Nähe davon.

**5.** Schneekette aus der Maschenware (30) gemäß Anspruch 4, wobei das zweite Schnurelement (35) aus einer unelastischen Schnur (67) besteht.

**6.** Schneekette aus der Maschenware (30) gemäß Anspruch 4 oder 5, wobei ein ringartiges Material (38) am Punkt X bereitgestellt wird, mit dem ein Ende des ersten Schnurelements (36, 37) verbunden wird, und das erste Schnurelement (36, 37) und das zweite Schnurelement (35) in das ringartige Material eingefügt werden, während das andere Ende des ersten Schnurelements (36, 37) mit dem zweiten Schnurelement (35) verbunden wird.

**7.** Schneekette aus der Maschenware gemäß einem der Ansprüche 4 bis 6, wobei ein Teil des ersten Schnurelements (37) aus einer unelastischen Schnur besteht und ein Teil der unelastischen Schnur (37) mit dem Punkt X versehen ist.

**8.** Schneekette aus der Maschenware gemäß Anspruch 7, wobei es eine Vielzahl von Paaren aus einem Teil der unelastischen Schnur (47a, 47b, 47c) des ersten Schnurelements (46a, 47a, 46b, 47b, 46c, 47c) und dem entsprechenden zweiten Schnurelement (45a, 45b, 45c) gibt und ein Teil jeder unelastischen Schnur den Punkt X beinhaltet.

**9.** Schneekette aus der Maschenware gemäß Anspruch 4 oder 5, wobei das erste Schnurelement (56, 57) aus der elastischen Schnur (56) und der unelastischen Schnur (57) besteht, zwei Punkte X auf der elastischen Schnur (56) liegen und ein zweites Schnurelement (54, 55) mit jedem der beiden Punkte X verbunden ist, so dass die zweiten Schnurelemente (54, 55) einander überkreuzen.

**10.** Schneekette aus der Maschenware gemäß Anspruch 4 oder 5, wobei das gesamte erste Schnurelement (76) aus der elastischen Schnur besteht, vier Punkte X auf dem ersten Schnurelement (76) liegen, ein zweites Schnurelement (74a, 75a, 74b, 75b) mit jedem der beiden gepaarten benachbarten Punkte X verbunden ist, so dass die zweiten Schnurelemente (74a, 75a, 74b, 75b) einander überkreuzen.

**11.** Schneekette aus der Maschenware (10) gemäß einem der Ansprüche 1 bis 3, umfassend:

einen Innenflächenteil, der einer inneren Seitenfläche des Reifens (60) entspricht und der an einem äußeren Umfangsrandteil in die Maschenwarenstruktur (11a) übergeht und einen in seiner Mitte ausgebildeten Öffnungsteil (68) beinhaltet;
wobei der Innenflächenteil mehr als zwei Schnurelemente umfasst, die nur aus der elastischen Schnur (88, 89) bestehen oder aus der elastischen Schnur (84c, 85c) und der unelastischen Schnur (84a, 84b, 85a, 85b), die miteinander verbunden sind, bestehen;

wobei die Schnurelemente (84, 85, 88, 89) eine U-Form haben und so angeordnet sind, dass sie einander wenigstens in einem Winkel von 90˚ überkreuzen, so dass gekrümmte Oberflächenteile davon an einem Umfangsrand des Öffnungsteils (68) positioniert werden können; und

beide Enden jedes der Schnurelemente mit einem äußeren Umfangsrandteil des Innenflächenteils oder in dessen Nähe verbunden sind.

**Revendications**

1. Chaîne à neige constituée d'un tissu à mailles (10), conçue à être montée de manière amovible sur un pneu (60), comprenant:

   dans laquelle un corps cylindrique pour couvrir fermement au moins une surface de contact du pneu (60) a une structure de tissu à mailles (11a), **caractérisée en ce que**
   la relation entre la surface ouverte (S) d'une maille de la structure de tissu à mailles (11a) et la largeur (W) d'un écheveau de la structure de tissu à mailles (11a), quand la chaîne à neige constituée du tissu à mailles (10) est montée sur le pneu (60), satisfait la formule (1) suivante; et
   l'épaisseur d'une partie de croisement (15) de la structure de tissu à mailles (11a) est au plus trois fois l'épaisseur d'une partie de jambe nette (16) de la structure de tissu à mailles (11a):

$$2 \leq S^{1/2}/W \leq 15 \qquad (1).$$

2. Chaîne à neige constituée d'un tissu à mailles (10) selon la revendication 1, dans laquelle la finesse de fibre simple du fil de matériau principal destiné à être utilisé dans la structure de tissu à mailles (11a) est au moins 5 dtex et moins de 90 dtex.

3. Chaîne à neige constituée d'un tissu à mailles (10) selon la revendication 1 ou 2, dans laquelle la structure de tissu à mailles (11a) est une structure de tissu à mailles n'ayant pas de noeud dans la partie de croisement (15).

4. Chaîne à neige constituée d'un tissu à mailles (30) selon l'une quelconque des revendications 1 à 3, comprenant

   une partie de surface intérieure (33) correspondant à une surface latérale intérieure du pneu (60), qui se change en la structure de tissu à mailles (11) au niveau d'une partie de bord circonférentielle externe et qui comprend une partie d'ouverture formée au centre de celle-ci;

   dans laquelle la partie de surface intérieure (33) comprend:

   un premier élément de corde (36, 37) pour dilater/restaurer une zone d'ouverture pour attacher/détacher le pneu (60), le premier élément de corde (36, 37) étant arrangé le long d'un bord circonférentiel de la partie d'ouverture; et
   un second élément de corde (35) pour limiter une force centrifuge agissant sur le premier élément de corde (36,37), quand le pneu (60) est actionné pour tourner, liant au moins un point X du premier élément de corde (36, 37) à au moins un point Y du bord circonférentiel externe (33b) de la partie de surface intérieure (33) ou dans son voisinage.

5. Chaîne à neige constituée d'un tissu à mailles (30) selon la revendication 4, dans laquelle le second élément de corde (35) est constitué d'une corde inélastique (67).

6. Chaîne à neige constituée d'un tissu à mailles (30) selon la revendication 4 ou 5, dans laquelle un matériau du type annulaire (38) est prévu au point X avec lequel une extrémité du premier élément de corde (36, 37) est liée, et le premier élément de corde (36, 37) et le second élément de corde (35) sont insérés dans le matériau du type annulaire lorsque l'autre extrémité du premier élément de corde (36, 37) est liée au second élément de corde (35).

7. Chaîne à neige constituée d'un tissu à mailles selon l'une quelconque des revendications 4 à 6, dans laquelle une partie du premier élément de corde (37) est constituée d'une corde inélastique, et une partie de la corde inélastique (37) est munie du point X.

8.  Chaîne à neige constituée d'un tissu à mailles selon la revendication 7, dans laquelle il y a une pluralité de paires consistant en une partie de la corde inélastique (47a, 47b, 47c) du premier élément de corde (46a, 47a, 46b, 47b, 46c, 47c) et le second élément de corde (45a, 45b, 45c) correspondant, et une partie de chaque corde inélastique comprend le point X.

9.  Chaîne à neige constituée d'un tissu à mailles selon la revendication 4 ou 5, dans laquelle le premier élément de corde (56, 57) est constitué de la corde élastique (56) et la corde inélastique (57), deux points X sont situés sur la corde élastique (56), et un second élément de corde (54, 55) est lié à chacun des deux points X de telle sorte que les seconds éléments de corde (54, 55) se croisent.

10. Chaîne à neige constituée d'un tissu à mailles selon la revendication 4 ou 5, dans laquelle le premier élément de corde (76) est entièrement constitué de la corde élastique, quatre points X sont situés sur le premier élément de corde (76), un second élément de corde (74a, 75a, 74b, 75b) est lié à chacun de deux points X adjacents associés en paire de telle sorte que les seconds éléments de corde (74a, 75a, 74b, 75b) se croisent.

11. Chaîne à neige constituée d'un tissu à mailles (10) selon l'une quelconque des revendications 1 à 3, comprenant:

    une partie de surface intérieure correspondant à une surface latérale intérieure du pneu (60), qui se change en la structure de tissu à mailles (11a) au niveau d'une partie de bord circonférentielle externe et qui comprend une partie d'ouverture formée (68) au centre de celle-ci;
    dans laquelle la partie de surface intérieure comprend plus de deux éléments de corde constitués de la corde élastique (88, 89) seulement, ou constitués de la corde élastique (84c, 85c) et la corde inélastique (84a, 84b, 85a, 85b) liées l'une à l'autre;
    les éléments de corde (84, 85, 88, 89) ont une forme d'U et sont arrangés pour se croiser au moins avec un angle de 90˚ de telle sorte que des parties de surface courbées de ceux-ci peuvent être positionnées au niveau d'un bord circonférentiel de la partie d'ouverture (68); et
    les deux extrémités de chacun des éléments de corde sont liées à un bord circonférentiel externe de la partie de surface intérieure ou dans son voisinage.

Fig. 1

Fig. 2

Fig. 3

M

11

Fig. 4

(a)

(b)

(c)

Fig. 5

Width of strand

Fig. 6

Fig. 7

Fig. 8

( a )

( b )

Fig. 9

Fig. 10

(a)

(b)

(c)

(d)

Fig. 11

(a)

(b)

(c)

Fig. 12

Fig. 13

Fig. 14

Stitches
(two rows of chain stitching)

Stitches
(two rows of chain stitching)

Rubber bund

Diamond mesh width for seven meshes
Six stitches of perforation

5cm

Rubber bund having
a width of 2 cm

φ 580 outer cloth

Outside of tire

Rubber bund

φ 580 inner cloth

5cm

Inside of tire

EP 2 006 127 B1

Fig. 15

Fig. 16

(a)

(b)

Stitches
(two rows of chain stitching)

Stitches
(two rows of chain stitching)

Inner cloth

Diamond mesh width
for seven meshes
Six stitches of perforation

5cm

φ 580 outer cloth

Outside of tire

(c)

Thin width fabric
(80 cm)

Rubber band

Y          Y

X

40cm

X

φ 580
inside surface portion

X

X

Y

5cm

Inside of tire

EP 2 006 127 B1

Fig. 17

Fig. 18

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7156622 A
- JP 2002541007 PCT
- DE 16057148 A
- US 2006011281 A
- FR 403877 A